# EUROPEAN PATENT APPLICATION

(11) **EP 4 474 498 A2**
(43) Date of publication of application: **11.12.2024**
(21) Application number: 24207339.3
(22) Date of filing: 06.07.2021
(51) Int. Cl.: C22B 1/24

(54) **PROCESSING OF TITANIFEROUS ORES AND MINERALS**

(30) Priority: 10.07.2020 US 202063050571 P
(62) Divisional of application: 21837395.9
(71) Applicant: NSGI Non-Ferrous Metals Inc., Montreal QC H9H 1L4 (CA); FNC Technologies Inc., Westmount QC H3Z 2M8 (CA)
(72) Inventor: DI CESARE, Enrico, Pierrefonds, H9H 1L4 (CA)
(74) Representative: Jacob, Reuben Ellis

(57) **Abstract**

The present invention relates to metallurgical processes, and more particularly to a process for producing titaniferous feedstock and fines, a process for agglomerating titaniferous fines, and a process for producing titaniferous metals and titaniferous alloys. Recovery of rare-earth, vanadium and scandium from titanium iron bearing resources is also disclosed. Selective leaching for Scandium recovery from all magnetite type resources such as ilmenite, ferro titanic resources, nickel laterites, magnetite iron resources etc.

## Description

### BACKGROUND

### (a) Field

The subject-matter disclosed herein generally relates to metallurgical processes, and more particularly to a process for producing titaniferous feedstock and fines, a process for agglomerating titaniferous fines, and a process for producing titaniferous metals and titaniferous alloys. Recovery of rare-earth, vanadium and scandium from titanium iron bearing resources is also disclosed. Selective leaching for Scandium recovery from all magnetite type resources such as ilmenite, ferro titanic resources, nickel laterites, magnetite iron resources etc.

### (b) Related Prior Art

Various metallurgical processes are known for producing titaniferous feedstock of fines used for making refined or upgraded titaniferous material, such as the chloride process and the sulfate process. For example, Canadian patent number 2,338,716 relates to a method of treating titania slag to increase the leachability of impurities from the slag, so-called beneficiation of titania slag by oxidation and reduction. Canadian patent application number 2,210,743 similarly relates to a method to upgrade titania slag and resulting product. United States patent number 9,896,742 describes a method for processing vanadium-titanium magnetite finished ores by using a wet process, which involves extracting vanadium from vanadium-titanium magnetite finished ores. United States patent number US 6,149,712 teaches a process for increasing the particles size of fines of a titaniferous ore or mineral containing more than 45% by weight of titanium.

Other methods of producing titanium metal from titanium-containing materials are also well known in that art. For example, WO2006079887 (Pretorius G.), also known as the "Peruke" process, which relates to a method of producing titanium metal from a titanium-containing material including the steps of producing a solution of M"TiF6 from the titanium-containing material, selectively precipitating M'2TiF6 from the solution by the addition of (M')aXb and using the selectively precipitated M'2TiF6 to produce titanium. M" is a cation of the type which forms a hexafluorotitanate, M' is selected from ammonium and the alkali metal cations, X is an anion selected from halide, sulphate, nitrite, acetate and nitrate and a and b are 1 or 2.

Currently, metal powder technology is in high demand by the world's engineering industry as there is virtually no waste of material production in the manufacturing process.3D printing industry requires spherical and small size particles of metals, which are ideally produced with plasma atomization.

However, there is still a need for a metallurgical process for producing titaniferous feedstock and fines that may conveniently be used by the chloride process with minimal losses of titaniferous material, such as titaniferous fines. There is also still a need for a process for producing titaniferous metal and titaniferous fines that are both convenient and cost-effective. There is also a need for greener processes that enable those versed in the art to reduce chemical usage when producing titaniferous feedstock and fines, as well as, vanadium and scandium from titanium iron bearing resources. There is also a need for an improved method of using a plasma atomizer to create drops of titanium that are perfectly sized and spherical, and an ideal product for 3D printing.

### SUMMARY

According to an embodiment, there is provided a process for producing titaniferous feedstock and fines by Direct-Shipping Ore (DSO) process.

According to another embodiment, there is provided a process for regenerating hydrochloric acid during a production of tinaniferous feedstock and fines by Direct-Shipping Ore (DSO) process.

According to another embodiment, there is provided a binder for agglomerating titaniferous fines.

According to another embodiment, there is provided a process for agglomerating titaniferous fines.

According to another embodiment, there is provided a process for a synthetic form of rutile.

According to another embodiment, there is provided a process for separating vanadium derivatives from a leaching solution.

According to another embodiment, there is provided a process for separating scandium from a leaching solution.

According to another embodiment, there is provided a process for recovering rare-earth and scandium from a leaching solution and regenerating hydrochloric acid.

According to another embodiment, there is provided a process for recovering scandium and critical elements with a selective leach from ore bodies and iron rich materials.

According to another embodiment, there is provided a process for leaching selectively salt metals from synthetic rutile (concentrating TiO2 in slag through melting) with by product fertilizer.

According to another embodiment, there is provided a process for producing titaniferous metals and alloys.

According to another embodiment, there is provided a process for producing titaniferous metals and alloys by contacting TiF₃ with plasma atomization technology.

According to another embodiment, there is provided a process for producing titaniferous metals and alloys by reducing TiF₃ by aluminum / iron exchange.

According to another embodiment, there is provided the use of process for producing titaniferous metals and alloys adapted for 3D printing.

The following terms are defined below.

The term DSO is intended to mean the process for Direct-Shipping Ore.

The term critical elements is intended to mean any one of, or all of, the following : cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y).

The term plasma is intended to mean plasma atomization technology and processes used to create metal powders sized and of spherical shape for 3D printing. Plasma atomization technology is intended to include, but it is not limited to, plasma atomization and plasma rotating electrodes process atomization.

The term rare-earth metals is intended to mean any one of, or all of, the following : cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y).

Features and advantages of the subject-matter hereof will become more apparent in light of the following detailed description of selected embodiments, as illustrated in the accompanying figures. As will be realized, the subject-matter disclosed and claimed is capable of modifications in various respects, all without departing from the scope of the claims. Accordingly, the drawings and the description are to be regarded as illustrative in nature and not as restrictive and the full scope of the subject-matter is set forth in the claims.

### BRIEF DESCRIPTION OF THE DRAWINGS

Further features and advantages of the present disclosure will become apparent from the following detailed description, taken in combination with the appended drawings, in which:
Fig. 1 is a block diagram illustrating a process for producing titaniferous feedstock and titaniferous fines from a titaniferous ore and/or mineral (DSO process).
Fig. 2 is a block diagram illustrating a process for agglomerating titaniferous fines (agglomeration process) using a binder for agglomerating titaniferous fines.
Fig. 3 is a block diagram illustrating a process for producing titaniferous feedstock and titaniferous fines from a titaniferous ore and/or mineral (DSO process), which includes extracting vanadium derivatives from the titaniferous ore and/or mineral.
Fig. 4a and 4b are a block diagram illustrating a process for producing titaniferous feedstock and titaniferous fines from titaniferous ore and/or mineral (DSO process), which includes extracting scandium derivatives from the titaniferous ore and/or mineral after leaching with nitric acid.
Fig. 5 is a block diagram illustrating a process for producing titaniferous feedstock and fines from titaniferous ore and/or mineral (DSO process), which includes extracting scandium derivatives and rare-earth from the titaniferous ore and/or mineral after leaching with hydrochloric acid.
Fig. 6 is a block diagram illustrating a process for producing high-purity titaniferous feedstock used for titanium metal production.
Fig. 7 is a block diagram illustrating a process for producing titanium metal and titanium alloy(s) with aluminium.
Fig. 8 is a block diagram illustrating a process for producing titanium metal and titanium alloy(s) with plasma.
Fig. 9 is a block diagram illustrating how the different embodiments of the present invention may be linked together.

It will be noted that throughout the appended drawings, like features are identified by like reference numerals.

### DETAILED DESCRIPTION

### Process for Producing Titaniferous Feedstock (DSO Process)

In an embodiment, there is disclosed a hydrometallurgical process for producing titaniferous feedstock for direct-shipping ore (DSO) from a titaniferous ore, a titaniferous mineral, and/or any other starting material containing titanium (referred to as the "DSO process" hereinafter). The DSO process produces titaniferous feedstock and/or titaniferous fines which is or are adapted for or amenable to the chloride process, which produce higher-grade or pigment-grade titanium dioxide (TiO₂) (i.e. a material concentrated in TiO₂ content). The DSO process may also comprise regenerating hydrochloric acid (HCl) from by-products and recovering vanadium, scandium and other rare-earth metals from a processed ore or mineral.

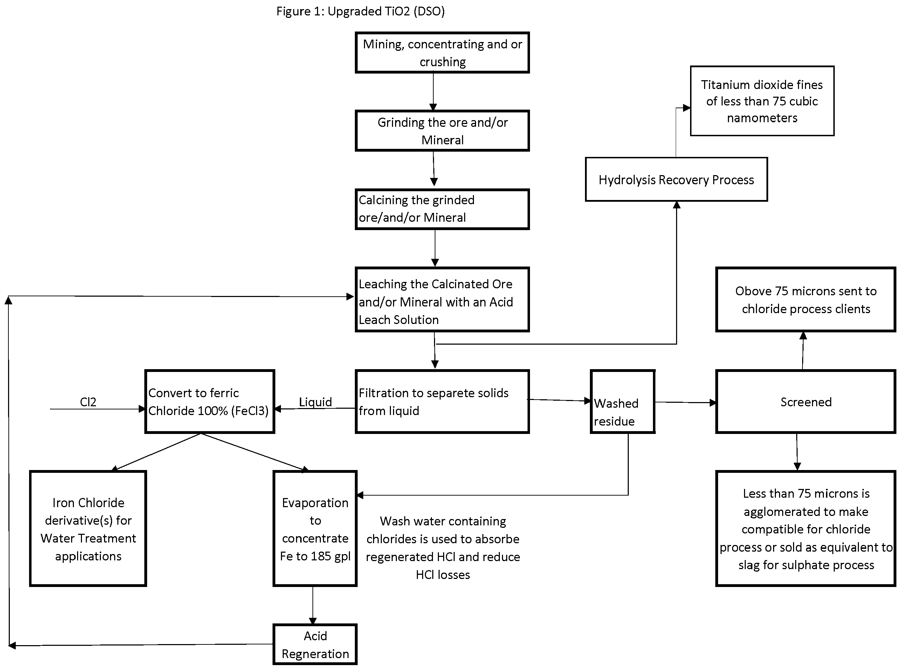

Referring now to Fig. 1, a block diagram illustrates an embodiment of a process for producing titaniferous feedstock and titaniferous fines from a titaniferous ore and/or mineral (DSO process). Exemplary titaniferous ore(s) and/or mineral(s) that may be used as starting material with the DSO process include, but not limited, to ilmenite, rutile, anatase, brookite, leucoxene, and/or any other titaniferous starting material(s), which may be in the form of lump ore(s). Exemplary ore(s) and/or mineral may also have, e.g., between (i) at least about 30%(w/w) titanium dioxide and at least about 55%(w/w) iron oxides, depending on the concentration levels of the magnesium, calcium, and sodium salt(s) that may be present in the ore starting material; (ii) between about 20%(w/w) and about 70%(w/w) titanium dioxide; between about 20%(w/w) and about 80%(w/w) iron oxides; (iv) between about 0%(w/w) and about 20%(w/w) magnesium oxide; (v) between about 0%(w/w) and about 20%(w/w) calcium oxide; and (vi) between about 0%(w/w) and about 10%(w/w) alumina and silica compounds. Other exemplary ores used by the DSO process comprise for example between about 10%(w/w) and about 60%(w/w), between about 15%(w/w) and about 50%(w/w), or between about 20%(w/w) and about 40%(w/w) of titanium dioxide. Still other exemplary ores used by the DSO process comprise for example between about 40%(w/w) and about 90%(w/w), between about 50%(w/w) and about 85%(w/w), or between about 60%(w/w) and about 80%(w/w) of iron oxides.

Preferably, the titaniferous ore used by the DSO process contains more than about 30%(w/w) of titanium dioxide, such as between about 31 %(w/w) and about 60%(w/w) of titanium dioxide. More preferably, the titaniferous ore used by the DSO process contains between about 38%(w/w) and about 54%(w/w) of titanium dioxide. Exemplary titaniferous ore having more than about 30%(w/w) of titanium dioxide content are rutile (which might be used directly with the chloride process), ilmenite (which might be melted to make synthetic slag or processed directly by the sulphate process), and partially weathered ilmenite. Advantageously, the DSO process may use partially weathered ilmenite, which usually contains between about 50%(w/w) and about 60%(w/w) titanium dioxide, to produce titaniferous feedstock having at least about 80%(w/w) of titanium dioxide content.

Preferably, the titaniferous ore used by the DSO process contains between about 50%(w/w) and about 70%(w/w), or preferably about 60%(w/w) of iron oxides.

In an embodiment, the DSO process may use titaniferous minerals. Exemplary titaniferous minerals may comprise off-spec titaniferous pigments, titaniferous residues from the chloride process or the sulfate process (i.e. bag house dust or fines), titaniferous residues from the hydrolysis recovery process (see hereinafter for more details), and combination thereof.

As for the DSO process itself, it comprises the steps of mining and crushing a titaniferous ore, grinding the titaniferous ore into particles of smaller size, calcinating the titaniferous particles, leaching the calcinated titaniferous particles, and separating or filtering the leached titaniferous particles from the leaching solution to recover titaniferous feedstock. At this point, the separated or filtered titaniferous feedstock are sorted or screened for size. The titanium dioxide feedstock of larger size may be used by the chloride process. On the other hand, the titanium dioxide feedstock or fines of smaller size may be used by the agglomeration process to produce agglomerated pellets or briquettes of titanium dioxide, which size and carbon content are adapted for or amenable to the chloride process, as it will become apparent hereinafter.

In an embodiment, a mined titaniferous ore is initially grinded or crushed into titaniferous particles of smaller size. Since the calcining and the subsequent leaching steps of the DSO process reduce the particles size, the titaniferous particles must be initially grinded or crushed so that the size of the grinded particles is adapted for use by the chloride process at the end of the DSO process. For example, the mined titaniferous ore is initially grinded or crushed into particles having a size between about five (5) cubic inches and about one (1) cubic inch, or about between about three (3) cubic inches and about one (1) cubic inch. Preferably, the mined titaniferous ore is grinded or crushed into particles of about one (1) cubic inch in size. Then, the grinded or crushed titaniferous particles are further grinded or crushed into particles of smaller size to be used by the DSO process. For example, the titaniferous particles may be further grinded or crushed into particles having a size between about 100 cubic microns (µm³) and about 700 cubic microns. Preferably, the titaniferous particles are grinded or crushed into particles having a size between about 200 cubic microns and about 600 cubic microns, which particles size are used in the subsequent calcinating step.

In an embodiment, the grinded or crushed titaniferous particles are submitted to calcination, which cleaves the iron-titanium (Fe-Ti) bond thereof. For example, using ilmenite (FeTiOs) as starting material in the DSO process, the iron-titanium bond is cleaved during calcination to convert ilmenite into hematite (Fe₂O₃) and titanium dioxide (TiO₂). Particularly, the calcination of the titaniferous particles is conducted in a suitable reactor, such as a fluidized bed or heated bed, at calcinating temperature between about 750°C and about 1250°C, or between about 800°C and about 1200°C. Preferably, the calcinating temperature is between about 880°C and about 1100°C. The titaniferous particles may be pre-heated prior to be subjected to calcination. Also, the titaniferous particles are calcinated between about 30 minutes and about 8 hours, depending on the size of the titaniferous particles.

The calcination may be performed in the presence of gaseous oxygen (O_{2(g)}) at a temperature below about 900°C to produce titanium dioxide in the form of anatase and to convert magnetite into hematite. The gaseous oxygen may be provided to the reactor from ambient air or any oxygen source(s). The gaseous oxygen may be present at ambient pressure or at any substantially positive pressure inside the reactor. For example, calcination may be performed in presence of between about 0.1% and about 3%, between about 0.5% and about 2%, between about 1% and about 2%, or in presence of about 1% of free oxygen.

The person skilled in the art will appreciate that the reaction conditions, including the calcination temperature, calcination time, as well as the amount and pressure of oxygen in the reactor, as the case may be, may vary according to the particular mineral(s) content of the starting material being processed by the DSO process.

Critical elements can be selectively leached from the calcined titanium iron material with nitric acid. Critical elements include cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium(Tb), thulium (Tm), ytterbium (Yb), and yttrium (Y).)

In an embodiment where high-purity titanium dioxide feedstock is needed for titanium metal production, no calcination is carried out at this step, and the material is precipitated, e.g. by seeding with a crystallization agent, to obtain the high-purity titanium dioxide feedstock to produce TiF₃, as it will become apparent hereinafter.

In an embodiment, the calcinated titaniferous particles are then submitted to one or more leaching cycle(s) with excess amount of acid, such as hydrochloric acid (HCl) to remove impurities and/or contaminants therein and to provide an upgraded product with respect to titanium content thereof. Such impurities and/or contfaminants usually comprise but are not limited to iron, which may be present in various form in the ore, as well as oxides or salts of magnesium, calcium, sodium, and the like. Leaching converts titanium, iron, and other soluble elements into their respective chloride salts and leave an excess of free acid. As a result of calcination, the titanium dioxide presents in the calcinated titaniferous particles is substantially unleachable using aqueous hydrochloric acid under the conditions described hereinafter and remains as solid particles that may be separated latter on during the DSO process. However, under these same conditions, hematite impurity/contaminant is converted into iron(III) chloride (FeCl₃), which is readily leacheable and removed along with other impurities and/or contaminants from the calcinated titaniferous particles. For the magnetite remaining that leaches as FeCl₂ a stoichiometric addition of Cl₂ converts the remaining iron chlorides to FeCl₃.

Particularly, in the case of hydrochloric acid, leaching is conducted by cooling and mixing the titaniferous particles with hydrochloric acid in a suitable reactor under relatively elevated temperature and pressure. The leaching concentrations of hydrochloric acid must be sufficient to combine with the impurities or contaminants in order to form soluble chlorides derivative thereof and is between about 16%(w/w) and about 40%(w/w), between about 18%(w/w) and about 37.5%(w/w), between about 18%(w/w) and about 36%(w/w), between about 25%(w/w) and about 37%(w/w), between about 30%(w/w) and about 40%(w/w), between about 30%(w/w) and about 37.5%(w/w), between about 18%(w/w) and about 25%(w/w), or between about 30%(w/w) and about 36%(w/w). Preferably, the hydrochloric acid concentration is between about between 18%(w/w) and about 22%(w/w), or between about 20%(w/w) and about 22%(w/w).

The person skilled in the art will appreciate that the leaching concentration of hydrochloric acid or sulfuric acid may vary according to the titanium content of the ore and/or mineral processed by the DSO process. In the case of hydrochloric acid, the concentration thereof may also vary according to the type of hydrochloric acid used, either it is fresh hydrochloric acid or regenerated hydrochloric acid. Because regenerated hydrochloric acid used for leaching usually has a lower concentration as compared to fresh hydrochloric acid, which usually has a concentration of about 37.5%, fresh hydrochloric acid may be added to the regenerated hydrochloric acid in order to obtain a hydrochloric acid concentration suitable for leaching. The average concentration may be between 20 to 23% based on acid losses of about 8% with the filtered material. Fresh hydrochloric acid may also be added to the leaching solution to make up for losses during filtration and washing of processed ore material, such as of titanium dioxide. It will further be appreciated that the initial water content of the titaniferous ore or mineral starting material, which may vary between about 5% and about 25%, also factor in when it comes to hydrochloric acid losses during operation of the DSO process. Also, the water content of the titaniferous ore or mineral may thus be considered in selecting the size of the particles in order to optimize hydrochloric acid losses, keeping in mind that the sizes of the titaniferous ore must remain adapted for or amenable to the chloride process.

The temperature at which the titaniferous particles are leached by the hydrochloric acid is a relatively elevated temperature, such as between about 60°C and about 160°C, between about 70°C and about 150°C, between about 70°C and about 130°C, between about 70°C and about 110°C, or between about 130°C and about 150°C. For example, the leaching temperature may be between about 70°C and about 110°C when a hydrochloric acid concentration of between about 25%(w/w) and about 37%(w/w) is used for leaching. The leaching temperature may be between about 130°C and about 150°C when a hydrochloric acid concentration of between about 18%(w/w) and about 25%(w/w) is used for leaching. Preferably, the leaching temperature is about 50°C when a hydrochloric acid concentration of at least about 30% is used for leaching at atmospheric pressure (i.e. without pressure in the reactor). The person skilled in the art will appreciate that the leaching temperature may be increased when lower concentration of hydrochloric acid (e.g. between about 18% and about 22%) is used for leaching. Generally speaking, every temperature increases of 10°C double leaching reaction kinetic, and every concentration increase of 2% in hydrochloric acid concentration double leaching reaction kinetic. In the case of leaching with sulphuric acid, the calcinating temperature is maintained below about 900°C since calcinating the titaniferous material at temperature above about 900°C usually converts the titaniferous material into rutile, which is not leacheable or digestible by sulfuric acid. Preferably, the titaniferous material is calcinated at a temperature above about 700°C when subsequent leaching is carried out with sulfuric acid.

The leaching pressure at which the titaniferous particles are leached by the hydrochloric acid relates to temperature inside the reactor and may vary widely. Depending amongst other thing on the starting material and other leaching reaction condition(s) used, leaching may be performed at a pressure above atmospheric pressure or at atmospheric pressure. For example, the pressure developed from aqueous hydrochloric acid during leaching may be between about 5 psi and about 100 psi, between about 10 psi and about 75 psi, or between about 20 psi and about 50 psi. Preferably, leaching is performed between about 20 psi and about 30 psi when a hydrochloric acid concentration of about 20% and a leaching temperature of about 130°C are used for leaching, or leaching is performed at atmospheric pressure when a hydrochloric acid concentration of at least about 30% is used for leaching.

The leaching time at which the titaniferous particles are leached by the hydrochloric acid vary according to other leaching conditions, including the hydrochloric acid leaching concentration, the leaching temperature, and the leaching pressure. The titaniferous particles and hydrochloric acid are leached together for a sufficient period of time to allow a thorough leaching of the impurities, generally between about 15 minutes and about 6 hours, between about 30 minutes and about 6 hours, or between about 45 minutes and about 5 hours. Preferably, the leaching time is between about 30 minutes and about 1 hour.

In an embodiment, the leached titaniferous particles are separated, such as by filtration, from the leaching solution and washed to remove the remaining leaching solution and impurities/contaminants using water steam and/or pressurized water. Such separation and washing operations are by filter press(es) and the like, as known in the art. Depending on the size of the titaniferous particles, various wash cycles may be required to effectively remove the remaining leaching solution and impurities/contaminants. The smaller are the size of the titaniferous particles, the more leaching solution and impurities/contaminants remain trapped into same and, therefore, various wash cycles are normally required. To minimize hydrochloric acid losses (and optimize hydrochloric acid regeneration from the leaching solution), the size of the titaniferous particles may be adjusted so that a minimum amount of leaching solution remains trapped into the particles. For example, the size of the titaniferous particles may be so that between about 5%(w/w) and about 25%(w/w) of the total leaching solution weight remains trapped into the particles after leaching.

In an embodiment, the titaniferous feedstock is sorted according to their sizes as the DSO process produces titaniferous feedstock and fines of various sizes. The filtered titanium rich residue is dried and screened. Typical moisture levels for this type of material will be in the range of 5 to 15% depending on the average size and is dependent on surface area.

Depending on the density of the material produced and related to the started feed. In an embodiment, the particle size would be 50% above 75 cubic microns and 50% below 75 microns. The finer material will be processed with the agglomeration technology or sold to the sulphate process that does not have a size limitation.

Each ore is prepared differently. The initial size prior to calcining and leaching can be in the range of 250 to 750 cubic microns. The sizing is dependent on maximizing the larger size for the upgraded TiO₂ and removal of MgO and reduction of iron. The calcining temperature makes all the material amenable to the sulphate process and chloride process. The only limitation for the chloride process is size. All the material can be digested by the sulphate process.

While the titanium dioxide is substantially unleachable during the leaching step with HCl of the DSO process, the titanium dioxide may still be partially leached away by the leaching solution depending on various parameters, such as the chemical nature of the titaniferous ore and/or titaniferous mineral starting material and the reaction conditions of the calcination and/or leaching steps. For example, the titanium dioxide may have been partially leached away by the leaching solution due to improper calcination. The titanium material, such as titanium dioxide (TiO₂) and/or various form of titanic acid (e.g. TiO(OH)₂), leached away may be recovered by crystallization (a recovery process known as "hydrolysis"; referred to as the "hydrolysis recovery process" hereinafter).

To recover leached titanium material by the hydrolysis recovery process, crystallization agent, such as titanium dioxide nuclei, is first prepared. For example, nuclei may be prepared by adjusting the pH of a titanium oxychloride-rich solution between about 6 and about 8, preferably the pH is about 7, with sodium hydroxide, and by letting the nuclei settle while removing excess liquid from the top of the solution. Alternatively, titanium dioxide nuclei may be prepared by micronizing titanium dioxide particles to a size under about 50 cubic microns. Then, the leaching solution containing titanium material to be recovered is heated to a temperature between about 80°C and about 120°C, or preferably about 108°C, and about 1% nucleating agent, such as titanium dioxide nuclei, is added thereinto to crystalize titanium dioxide. The heating and precipitation cycle last generally between about 30 minutes and about 45 minutes. Generally, as more nuclei are added, the smaller the final titanium dioxide particles are. The crystalized material, which includes a mixture of titanium oxychloride and titanium dioxide, is then filtered from the leaching solution, washed, and calcined to dry in order to remove complexed hydroxides and chlorides.

The titanium dioxide fines recovered by the hydrolysis recovery process generally has a purity between about 65% and about 98.5% titanium dioxide equivalent, preferably between about 97% and about 98.5% titanium dioxide equivalent. The titanium dioxide fines recovered by the hydrolysis recovery process have also a size below about 75 cubic nanometers, such as between about 5 cubic nanometers and about 75 cubic nanometers. Preferably, the titaniferous fines obtained from the hydrolysis recovery process has a purity of at least about 98.5%.

The titanium dioxide fines so crystalized may be processed or used in a number of ways. For example, the titanium dioxide fines recovered by the hydrolysis recovery process may be grown in a calciner, as known in the art, to a range between about 100 cubic nanometers to about 250 cubic nanometers, preferably about 200 cubic nanometers. After separation (e.g. by filtration) and washing, the titanium dioxide fines may be used with the agglomeration process in conjunction with a binder for agglomerating fines to adjust the particle size of the titanium dioxide fines in order to meet the chloride process feedstock particle size and purity requirements, as it will become apparent hereinafter. The titanium dioxide fines recovered by the hydrolysis recovery process may also be used as feedstock to the titanium metal production route for the production of titanium(III) fluoride (TiF₃), as it will also become apparent hereinafter.

The titaniferous material so obtained in solid form is then separated, such as by filtration, from the solution, washed and calcined as described hereinbefore to produce a high-purity titanium dioxide usable for titanium metal production, as it will become apparent hereinafter. For their parts, the solution may be processed for acid regeneration or for producing iron chloride derivatives (e.g. for water treatment).

In an embodiment, the DSO process may comprise a step for regenerating hydrochloric acid (HCl) from by-products, such as iron(III) chloride (FeCl₃; ferric chloride) and/or iron(II) chloride (FeCl₂; ferrous chloride), contained in the leaching solution to be cycled back upstream into the DSO process for further leaching. Such acid regeneration is economically advantageous as it allows recovering a portion of the excess amount of acid for further leaching. The DSO process was designed to be compatible with acid regeneration limits on acid of 18% and higher acids depending on the portion regenerated.

Prior to acid regeneration, the iron rich leaching solution can be acid regenerated as a ferrous chloride or a ferric chloride. Generally must be in one form or the other to work. 80% or more in each form for successful operation. Ideally focusing on achieving 90% or better in one form or the other. The preferred acid regeneration form is ferric chloride (FeCl3) and any adjustment necessary to convert the excess ferrous chloride (FeCl2) to ferric chloride is achieved by the addition of chlorine stoichiometric-ally for the conversion. Fe2+ to Fe3+, 90% or better. Conversely, if the acid regeneration is being performed in a ferrous chloride form scrap metal can be added to convert the ferric chloride to ferrous chloride. Fe3+ to Fe2+, 90% or better.

To regenerate hydrochloric acid, the leaching solution containing iron(III) chloride and/or iron(II) chloride is subjected to thermal decomposition or pyro-hydrolysis in a suitable reactor, such as a spray roaster or fluidized bed. In the case of iron(lll) chloride, the leaching solution is first concentrated and contacted with water to convert iron(III) chloride into hematite (Fe₂O₃) and gaseous hydrochloric acid. Hematite so produced may be converted to pig iron or for ferric industries, magnet industries or pigment depending on the purity. Then, the gaseous hydrochloric acid is absorbed onto a solid support and scrubbed with water in order to produce an aqueous solution having a hydrochloric acid concentration between about 15% and about 20%, or between about 16% and about 18%, or preferably about 18%. The aqueous hydrochloric acid so produced is cycled back upstream into the DSO process for further leaching. Alternatively, iron(III) chloride by-products may be used by water treatment facilities without requiring acid regeneration.

As such, the DSO process described herein produces titaniferous feedstock and/or titaniferous fines having between about 70%(w/w) and about 99%(w/w), between about 80%(w/w) and about 99%(w/w), between about 70%(w/w) and about 85%(w/w), between about 80%(w/w) and about 90%(w/w), or between about 85%(w/w) and about 92%(w/w) titanium dioxide content. The person skilled in the art will appreciate that the titanium content of the titaniferous feedstock and/or titaniferous fines varies according to the source of titaniferous ore and/or titaniferous mineral submitted as starting material to the DSO process.

### Process for Agglomerating Titaniferous Fines

In an embodiment, there is disclosed an agglomeration process that enables recovering titaniferous particles produced by the DSO process, or any other titaniferous particles, that are not adapted for or amenable to the chloride process with respect to size. Particularly, the agglomeration process is for agglomerating titaniferous particles, such as titaniferous feedstock and/or fines produced by the DSO process or any other titaniferous material, that are too small in size to be adapted for or amenable to the chloride process. The agglomeration process produces from such small particles titaniferous pellets of briquettes that are adapted for or amenable to the chloride process. The agglomeration process comprises a binder for agglomerating titaniferous particles that are too small in size to generally be adapted for or amenable to the chloride process. In addition to agglomerating titaniferous particles into titaniferous pellets of briquettes, the binder provides a carbon content to the agglomerated titaniferous particles that is compatible with the chloride process. Titaniferous particles used by the agglomeration process may come from natural or synthetic origin and generally have a titanium content that is at least about 70%(w/w).

The combination of both the DSO process and the agglomeration process enables the production of titaniferous feedstock that is adapted for the chloride process with a minimal loss of the titaniferous ore and/or titaniferous mineral starting material. Particularly, the proportion of the titaniferous feedstock and/or titaniferous fines produced by the DSO process that is not adapted for the chloride process may be used with the agglomeration process to provide agglomerated pellets or briquettes adapted for or amenable to the chloride process.

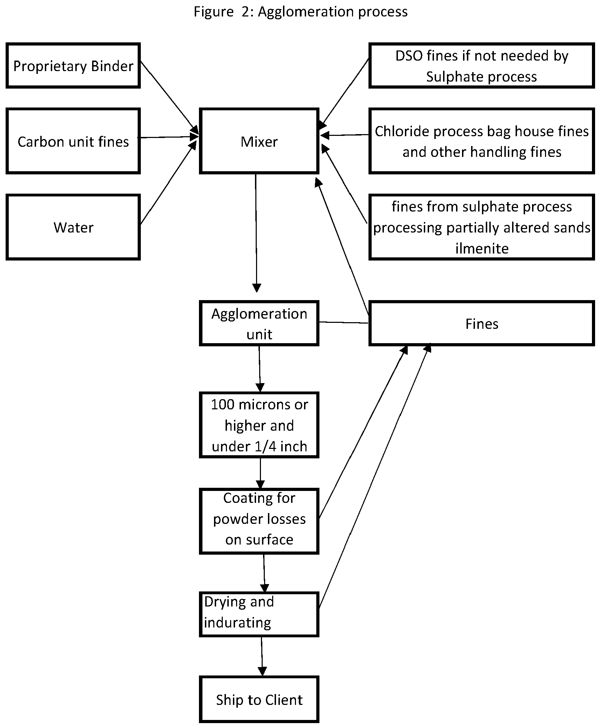

Referring now to Fig. 2, a block diagram illustrates an embodiment of a process for agglomerating titaniferous fines (agglomeration process) using a binder for agglomerating titaniferous fines. Exemplary titaniferous fines or titaniferous material that may be used as starting material with the agglomeration process comprises, e.g., fines that may be too small in size to be adapted for or amenable to the chloride process, including but not limited to, fines from the hydrolysis recovery process according to the present invention, hydrolyzed and upgraded titanium dioxide material, filter press titaniferous fines from the DSO Process, titaniferous fines from bag house of the chloride process, and rutile filter titaniferous fines from the sulfate process. The binder enables the production of agglomerated pellets or briquettes that are adapted for and amenable to the chloride process from these above-mentioned fines, The pellets or briquettes so agglomerated with the binder (and also with a source of carbon such as coke and/or coal) provides the agglomerated pellets or briquettes with the proper size requirement and the proper amount of carbon for the chloride process.

Two main technologies exist for processing titaniferous ore into refined titaniferous product: the chloride process and the sulfate process. The sulphate process produces anatase and rutile pigments, while the chloride process produced only rutile pigments. Particularly, the chloride process is a continuous process which comprises two main stages: the conversion of rutile (a titanium mineral) into titanium(IV) chloride (TiCl₄), and the oxidation of titanium(IV) chloride into titanium dioxide.

The person skilled in the art will therefore appreciate that the chloride process is particularly dependent on the particle size of the ore starting material, such as rutile, that is initially fed into the process. Generally, the size of the rutile particles that is required for the chloride process is between about 75 cubic microns and about ¼ cubic inch. It will further be appreciated that the chloride process also relies on the presence of carbon to fix and remove the oxygen contained in the ore in the form of carbon monoxide and carbon dioxide. The carbon source is usually provided to the reactor separately or independently from rutile during the first stage of the chloride process, as mentioned hereinbefore. Generally, the amount of carbon that is required for the chloride process is between about 10%(w/w) and about 50%(w/w) or between about 20%(w/w) and about 40%(w/w) to ensure optimal operation of the chloride process. Preferably, the amount of carbon that is required for the chloride process is between about 25%(w/w) and about 35%(w/w) to ensure optimal operation of the chloride process.

According to the present invention, the coal and/or coke required for the normal operation of the chloride process is provided with the titaniferous feedstock, which is agglomerated with a binder. By agglomerating titaniferous feedstock which is too small in size to be effectively used by the chloride process, the agglomeration process disclosed herein enables the production of agglomerated pellets or briquettes having a size adapted for the chloride process. Hence, it is possible to use titaniferous feedstock and/or fines that otherwise would not be readily amenable to the chloride process. The titaniferous feedstock used by the agglomeration process may come from a variety of sources, such as from the DSO process disclosed herein or from the titanium dioxide material coming from the hydrolysis recovery process. The person skilled in the art will appreciated that the coal and/or coke contained in the agglomerated pellets or briquettes may advantageously replace the traditional carbon source used in the chloride process, such that no additional carbon source needs to be added during normal operation of the chloride process when agglomerated pellets or briquettes are used according to the present invention.

In an embodiment, the binder that is used in the agglomeration process disclosed herein for agglomerating titaniferous fines into pellets or briquettes comprises the following ingredients:
- Sodium (Na): between about 4% and about 15%;
- Carboxylate acid: between about 35% and about 90%;
- Calcium (Ca): between about 1% and about 3%;
- Potassium (K): between about 1% and about 2%;
- Carbonates: between about 4% and about 5%; and
- Lignin: between about 8% and about 15%.

Advantageously, it has been found that titaniferous feedstock an/or titaniferous fines smaller in size than about 75 cubic microns and, thus, not necessarily amenable to the chloride process, may be agglomerated with the binder disclosed herein into agglomerated pellets or briquettes having a size adapted for use by the chloride process. It has further been advantageously found that a proper amount of carbon required by the chloride process to fix oxygen may be provided to the agglomerated pellets or briquettes by agglomerating or encapsulating the coal and/or carbon source with the binder. By providing agglomerated pellets or briquettes with a particle size and an amount of carbon adapted for the chloride process, the agglomeration process avoids the needs of separately or independently feeding a source of carbon during the first stage of the chloride process. Allowing for more carbon options to the end users including carbon that generally may have been deemed to fine. Therefore, the agglomeration process as described herein provides a synthetic rutile substitute, which advantageously replaces natural rutile traditionally used with the chloride process. The agglomerated pellets or briquettes also simplifies the operation of the chloride process by providing a synthetic rutile feedstock that already contains a source of carbon adapted for use by the chloride process to fix oxygen.

In addition, the agglomerated pellets or briquettes of the present invention, which are an upgraded synthetic rutile, are a viable alternative to at least some of the natural and/or synthetic rutile used by industry as starting material for the chloride process. Indeed, the upgraded synthetic rutile of the present invention is substantially free of magnesium oxide (MgO) and has also low concentrations of contamination metal salts, such as magnesium (Mg), calcium (Ca), and sodium (Na) salts, as compared to at least some of the traditional rutile used for the chloride process. At the chloride process operation temperature, magnesium oxide contained in ore starting material is melted and gum up the fluidized bed, reducing the efficacy of the chloride process. Higher is the magnesium oxide concentration present in the ore starting material, more difficult it is to operate properly the fluidized bed. Therefore, when natural ilmenite is used to produce synthetic rutile for the chloride process, magnesium oxide concentrates with titanium dioxide and additional processing is required to reduce the magnesium oxide percentages to below 0.4%. Also, binders know in the art used for agglomerating fines into particles which are subsequently used with the chloride process normally comprises various metal salts, including calcium, sodium, magnesium, that interferes with the chloride process. An example is cement which is principally Mg and Ca oxides. Advantageously, the binder disclosed herein does not comprise metal salt levels in an amount or concentration that would otherwise interfere with the chloride process. Preferably, the binder disclosed herein has a maximum of 0.3%(w/w) of metal salts, such as calcium, sodium, magnesium, based on the total combined weight of the titaniferous fines, coal and/or coke, and binder.

In an embodiment, to prepare the binder to be used with the agglomeration process, the dry binder is mixed with water in order to form a wet binder. The amount of water added may vary depending upon the particle size of the titaniferous feedstock and/or titaniferous fines used and the required size of the final agglomerates. For its part, the agglomeration process comprises the steps of: (i) contacting the titaniferous feedstock and/or titaniferous fines with coal and/or carbon to coat the titaniferous feedstock and/or titaniferous fines with the coal and/or carbon; (ii) contacting the coal/carbon-coated titaniferous feedstock with a the wet binder to completely coat the coal/carbon-coated titaniferous feedstock with the wet binder; (iii) pelletizing or briquetting the binder-coated titaniferous feedstock; (iv) and indurating the binder-coated titaniferous feedstock to produce agglomerated pellets or briquettes.

Particularly, the titaniferous feedstock or titaniferous fines having a size smaller than about 75 cubic microns are contacted or mixed with a proper amount of coal and/or carbon, such as with between about 10%(w/w) and about 60%(w/w), between about 20%(w/w) and about 50%(w/w), or between about 30%(w/w) and about 40%(w/w) of coal and/or carbon. Preferably, the titaniferous feedstock or titaniferous fines of size smaller than about 75 cubic microns are contacted or mixed with about 30%(w/w) of coal and/or carbon. Exemplary coal and/or coke source(s) that may be used with the agglomeration process of the present invention has a carbon content of between about 65%(w/w) and about 98%(w/w), between about 70%(w/w) and about 98%(w/w), or between about 25%(w/w) and about 50%(w/w). The contacting or mixing of the titaniferous feedstock or titaniferous fines with coal and/or carbon is performed so that the titaniferous feedstock or titaniferous fines is partially or completely coated by coal and/or carbon material. Preferably, the titaniferous feedstock or titaniferous fines is completely coated by coal and/or carbon material.

Then, the titaniferous feedstock or titaniferous fines coated by the coal and/or carbon is further contacted or mixed with a proper amount of wet binder, such as between about 0.1 %(w/w) and about 3%(w/w), between about 0.1 %(w/w) and about 2%(w/w), or between about 0.1 %(w/w) and about 1 %(w/w). Preferably, the titaniferous feedstock or titaniferous fines coated by coal and/or carbon is further contacted or mixed with about 1%(w/w) of wet binder. The contacting or mixing of the titaniferous feedstock or titaniferous fines with the wet binder is performed so that the carbon-coated titaniferous feedstock is partially or completely coated by the wet binder material. Preferably, the carbon-coated titaniferous feedstock or titaniferous fines is completely coated by the wet binder. The person skilled in the art will appreciate that the stoichiometric ratio of titanium dioxide to carbon contained in the titaniferous feedstock or titaniferous fines may be adjusted in order to achieve an optimal reaction during the chloride process for production of titanium (IV) chloride (TiCl₄).

In an embodiment, the agglomeration process may comprise a single coating step, wherein the titaniferous feedstock or titaniferous fine is coated by a coating mix comprising a coal and/or carbon material as well as the wet binder mixed all together.

The contacting or mixing step of the titaniferous feedstock with coal and/or carbon as well as with the wet binder may be conducted in any suitable manner as long as the titaniferous feedstock is coated by a very thin film of binder. In other words, the amount of coal and/or carbon as well as of binder used for coating the titaniferous feedstock or titaniferous fines should be kept to a minimum for optimal results. The contacting or mixing step may be conducted using devices incorporating a rolling/tumbling action (e.g. rotating disk or drum pelletisers or V-blenders) or incorporating an impacting/shearing action (e.g. high intensity micro-agglomerators or mixers), or even incorporating both actions. Agglomeration may also be conducted in stages or in closed circuit with product sizing screens. For example, the titaniferous feedstock may be completely or partially coated using a roll grinder. The resulting material is fed to a mixer with coal and/or coke as well as binder, so that the oxygen contained in the ore reacts with the carbon to form carbon monoxide (CO) and dioxide (CO₂). Depending on how the chloride process is to be operated, such as the operation of the furnace, the ratio between the titaniferous feedstock or titaniferous fines and the coal and/or coke may be adjusted for optimal reaction between the oxygen contained in the ore and the carbon.

In an embodiment, the agglomerated titaniferous feedstock or titaniferous fines is pelleted or briquetted and then indurated so as to form pellets or briquettes that may be use with the chloride process. The induration may be conducted at temperatures between about 40°C and about 100°C, or preferably at about 60°C, for a period of time ranging between about 2 hours and about 24 hours, depending on the initial water content of the agglomerated titaniferous fines. The drying step may be conducted in any suitable drying apparatus.

Depending of the envisioned use, the agglomerated pellets or briquets may be manufactured to have a given size range to suit the dynamic requirements of fluidized bed of the chloride process, such as between about 1/8 cubic inch and about ½ cubic inch. Preferably, the agglomerated pellets have a size between about ¼ cubic inch and about ½ cubic inch. All titanium dioxide fines that do not meet size requirement are screened off and returned to the process for agglomerating fines, including titanium dioxide fines collected in the bag house of the chloride process. As for the operation of the chloride process, blending the titaniferous fines with other materials, such as ground slag, rutile sands, and other feed known in the art for such purpose, may also help balance the normal functioning of the fluidized bed. Preferably, smallest size of agglomerated pellets or briquettes with the right blend of other raw materials is used to keep the fluidized bed buoyant and avoid the formation of an inactive layer. Also, the agglomerated pellets or briquettes and/or other raw materials is/are fed continuously to the fluidized bed in order to have the right size distribution for a normally functioning fluidized bed so that the agglomerated pellets or briquettes and the mix as a whole are not too large in size to prevent the normal functioning of the fluidized bed. If the agglomerated pellets or briquettes fall below about 75 cubic microns, the agglomerated pellets or briquettes may be entrained in the gas stream of the fluidized bed and thus lost to the reaction. If the pellets or briquettes fall above about 75 cubic microns, the agglomerated pellets or briquettes may cease to be buoyant within the fluidized bed and form an inactive layer at the bottom of the fluidized bed, thereby being deleterious to the reaction.

Advantageously, the agglomerated pellets are resistant to degradation forces associated with transport and handling as well as to the physical and chemical degradation forces and temperatures associated with the chloride process, including fluidized bed reductive chlorination processing. For transportation over long distances the binder mix is modified to prevent picking up humidity.

### PROCESS FOR RECOVERING VANADIUM

In an embodiment, the DSO process comprises recovering vanadium from the leaching solution of calcinated ore or minerals. During leaching, vanadium usually presents in magnetite-rich resources, such as ilmenite, may dissolved into the leaching solution along with other minerals and/or impurities.

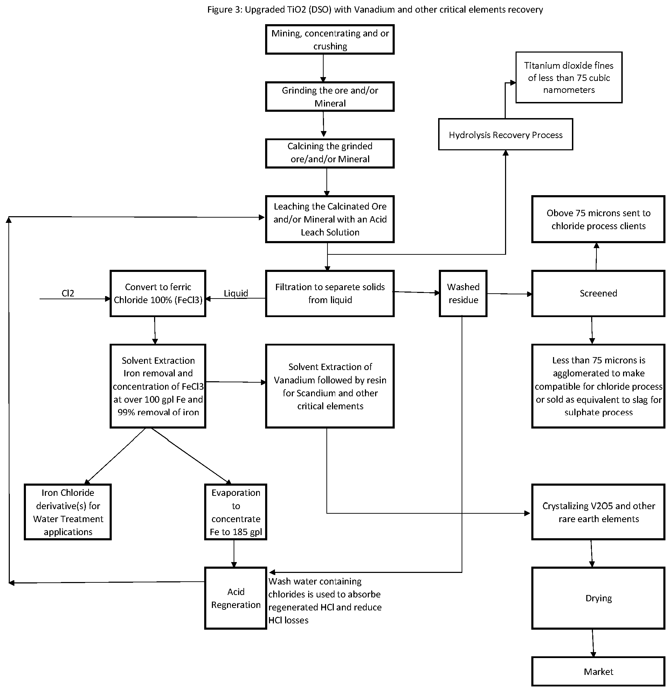

Referring now to Fig. 3, a block diagram illustrates an embodiment of a process for producing titaniferous feedstock and titaniferous fines from a titaniferous ore and/or mineral (DSO process), which further includes extracting vanadium derivatives from the titaniferous ore and/or mineral.

To recover dissolved vanadium, the leach solution is first filtered to separate solids from liquids. Iron(II) chloride is first converted into iron(III) chloride by the addition of chlorine, and iron(lll) chloride is then removed from the leaching solution by performing a liquid-liquid extraction on the leaching solution with a solvent mixture comprising between about 15% and about 25% diisobutyl ketone (DIBK) or methyl isobutyl ketone (MIBK), between about 50% and about 70% EXXAL-13, and between about 10% and about 30% ShellSol^{™} D-80 (CAS No. 64742-47-8). Alternatively, a solvent mixture comprising between about 17.5% and about 22.5% DIBK or MIBK, between about 55% and about 65% EXXAL-13, and between about 15% and about 25% D-80 is used. The ratio of solvent mixture to leaching solution used for the liquid-liquid extraction is about 0.25 (i.e. solvent mixture (1) to leaching solution (4)), about 0.50 (i.e. solvent mixture (1) to leaching solution (2)), about 0.75 (i.e. solvent mixture (3) to leaching solution (4)), or about 1.00 (i.e. solvent mixture (1) to leaching solution (1)), depending on the concentrations of iron chloride derivatives, such as iron(III) chloride, of the leaching solution.

Preferably, a solvent mixture comprising about 20% DIBK or MIBK, about 60% EXXAL-13, and about 20% D-80 is used. More preferably, DIBK and MIBK are used since it has been advantageously found that DIBK and MIBK are superior in removing iron chloride derivatives (99% or more), such as iron(III) chloride, from the leaching solution without concomitantly removing vanadium, as compared to Alamine^{®} 336 and cytec (now Solvay) formulations. Furthermore, DIBK is advantageously used because it has a higher flash-point than MIBK and because it enables a higher concentration of total iron after stripping, such as at 100 grams per liter (gpl) or higher of iron after stripping. DIBK and MIBK are both better than Alamine^{®} 336, which is less selective than DIBK and MIBK and may only achieve approximately 60 gpl of iron after stripping, resulting in more evaporation efforts to concentrate thereafter. As such, the liquid-liquid extraction achieves about 99% of total iron removal and produces a high-purity iron stream of about 99.9% purity. Advantageously, the high-purity material produced by the present process enables more uses of the product, such as batteries and high purity etching requirements beyond the traditional use in water treatment as a coagulant for metals.

Advantageously, it has been found that the above-mentioned solvent mixtures, such as a solvent mixture comprising about 20% DIBK or MIBK, about 60% EXXAL-13, and about 20% D-80, as well as the above-mentioned ratios of 0.25, 0.50, 0.75, and 1.00 are selective in collecting substantially only iron(III) chloride so that all other metals remain substantially in the leaching solution extracted. For example, the use of a solvent mixture comprising about 20% DIBK, about 60% EXXAL-13, and about 20% D-80 may remove between about 80% and about 99.9%, between about 90% and about 99.9%, between about 95% and about 99.9%, or preferably at least about 99% of iron chloride derivatives without concomitantly and substantially removing vanadium. The selectivity of the above-mentioned solvent mixtures, such as a solvent mixture comprising about 20% DIBK or MIBK, about 60% EXXAL-13, and about 20% D-80, as well as the above-mentioned ratios of 0.25, 0.50, 0.75, and 1.00, for ferric chloride derivative(s) over other metals has been shown to be also very selective with scandium, magnesium, and other elements that may be present, which includes critical elements such as rare-earth metals.

Still advantageously, iron(III) chloride, which can be as low as 30 to 40 gpl for pigment production, may be concentrated up to between about 100 gpl and about 120 gpl (without evaporation) when extracted using a solvent mixture comprising DIBK, which in turn reduces energy for evaporation to concentrate and water balances for the acid regeneration process. Indeed, such high iron(III) chloride concentrations conveniently require less evaporation in order to produce the iron(III) chloride concentrations of between about 160 gpl and about 210 gpl that are typically required for acid regeneration. Generally speaking, vanadium extraction processes known in the art yield a resulting iron(III) chloride concentration of about 60 gpl and, thus, require extensive evaporation to arrive to the concentrations of iron(lll) chloride required for acid regeneration. Another key feature of above-mentioned solvent mixture ratio of 0.25, 0.50, 0.75, and 1.00 is that these ratios allow for solvent mixtures having a flash point of about 40°C, which advantageously compares to the flash point of 20°C for MIBK alone with respect to fire hazards. The solvent extraction mix will have a flash point of at least 70°C making a normal operation safer.

Remaining dissolved in the leaching solution, the vanadium is thereafter extracted by liquid-liquid extraction with a solvent mixture comprising between about 10% and about 30% Cyanex 923, between about 10% and about 30% EXXAL-13, and between about 50% and about 70% CF 231 (for the purpose of vanadium extraction, CF 231 solvent is equivalent to D-80 solvent). Alternatively, a solvent mixture comprising between about 15% and about 25% Cyanex 923, between about 15% and about 25% EXXAL-13, and between about 55% and about 65% CF 231 is used. Preferably, a solvent mixture comprising about 20% Cyanex 923, about 20% EXXAL-13, and about 60% CF 231 is used. In an embodiment, CF 231 may be replaced by D-80.

Then, the extracted vanadium is precipitated with a precipitating agent, such as ammonium chloride (NH₄Cl) to yield ammonium metavanadate (NH₄VO₃) according to the following chemical equation:

NH₄Cl + VOCl₃ + 4 NaOH → NH₄VO₃ + 4 NaCl + 2 H₂O.

After a filtration step, the ammonium metavanadate is calcined using a rotary kiln operating at between about 500°C and about 550°C in order to dry and convert the filtered ammonium metavanadate into vanadium pentoxide (V₂O₅). Filtrate from the filter step may be pumped into a process water tank for reuse.

Advantageously, the production of titaniferous feedstock and fines without leaching out titanium enables the establishment of more compact plants or facilities as compared to traditional plant for metallurgical process requiring leaching ore or mineral to solubilize titanium mineral contained therein. This also enables the DSO process to use lower acid concentrations for leaching contaminants or impurities from the titaniferous ore or mineral starting material.

The person skilled in the art will appreciate that the above-described process for recovering vanadium, including the liquid-liquid extraction and solvent mixtures, may be used with proper modification to recover other rare-earths metal(s), including scandium (Sc), cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), terbium (Tb), thulium (Tm), ytterbium (Yb), and yttrium (Y), from a processed ore or mineral.

### PROCESS FOR RECOVERING SCANDIUM

In an embodiment, the DSO process comprises recovering scandium from a processed ore or mineral by selectively leaching with nitric acid or with hydrochloric acid. Scandium is commonly found in small quantities in many magnetite bearing ores and ores typically high in titanium and iron. Generally, all titanium-magnetite-type ores contain scandium. Scandium is also commonly found in the magnetite portion of nickel laterites and may account for a substantial quantity in tailings as most nickel operations will have a cut off of 1% nickel and very concentrated total iron. Many magnetite iron resources also have scandium present. Many tailings from different processes around the world for copper, phosphate among others often have non economical magnetite with contaminants and rare earths and critical elements that can be used to recover scandium and other rare earths and critical elements. Scandium recovery according to the present process is different depending on the raw starting material used.

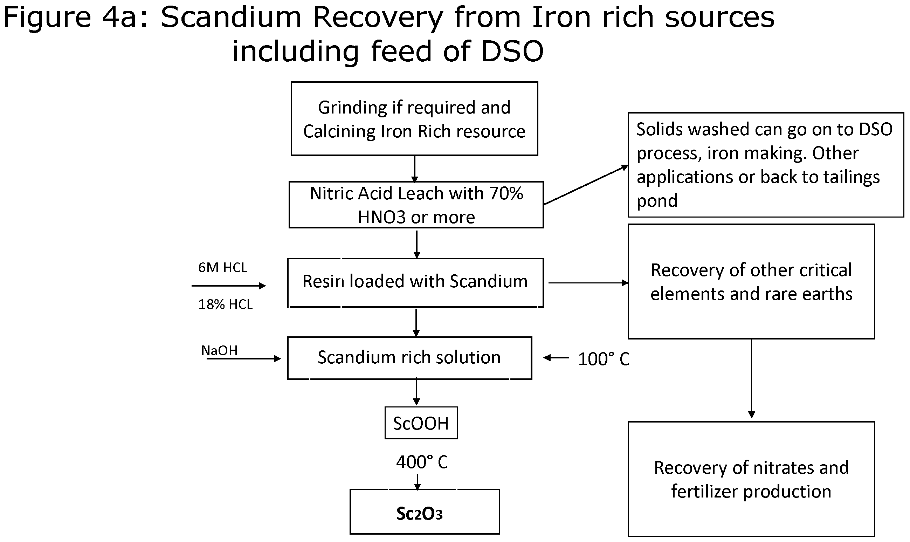

Referring now to Fig. 4a, a block diagram illustrates an embodiment of a process for producing titaniferous feedstock and titaniferous fines from titaniferous ore and/or mineral (DSO process), which includes extracting scandium derivatives from the titaniferous ore and/or mineral after leaching with nitric acid. This includes titanium enriched slags from pyro metallurgical operations which concentrate TiO2 and other metals like scandium.

The DSO process of the present embodiment comprises recovering scandium from a calcinated ore or mineral (such as TiO2 rich slag/synthetic rutile) according to the present invention by leaching with nitric acid at a leaching concentration between about 15%(w/w) and about 75%(w/w), between about 35%(w/w) and about 70%(w/w), between about 55%(w/w) and about 65%(w/w), preferably about 65%(w/w), following the procedure as generally described hereinbefore for leaching with hydrochloric acid in the DSO process. Leaching of the calcinated ore or mineral with nitric acid is according to the following chemical equation:

Sc₂O₃ + 6 HNOs -> 2 Sc(NO₃)₃ + 3 H₂O.

In an embodiment, nitric acid treatment leaches out salt metals such as magnesium, calcium and other critical elements such as scandium. Generally over 70% of scandium from the calcinated ore or mineral, but does not substantially leach out titanium, iron, alumina and silica therefrom. The leached ore or mineral is then separated, such as by filtration, from the leaching solution containing notably salt metals and scandium, and is then washed from impurities and contaminants. The resulting ore or mineral, which is concentrated in iron and titanium and substantially reduced in scandium, magnesium oxide and other salt metals content, is generally acceptable as a feedstock for the chloride process and sulphate process as is if TiO2 rich slag. The residue from ilmenite (iron/titanium resources) goes on to be treated as described by the DSO process to further reduce iron to make an upgraded TiO2 feed stock.

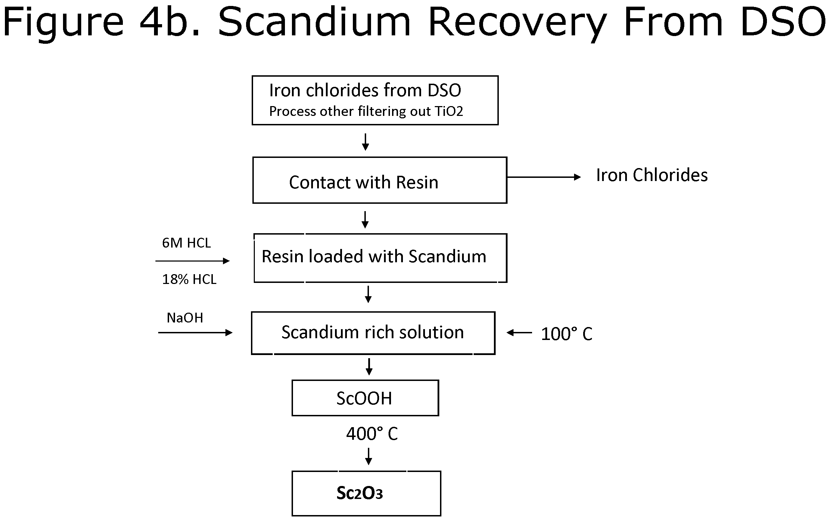

In an embodiment and referring now to Fig. 4b, a resulting ore or mineral, which is concentrated in iron and titanium and substantially reduced in scandiummay further be upgraded by leaching with hydrochloric acid, as described hereinbefore for the DSO process. When nitric acid leach is not performed, leaching of scandium with hydrochloric acid concentration between about 18% and about 22% may also be performed and is according to the following chemical equation:

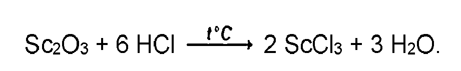

The leached scandium is then separated, such as by adsorption, from the leaching solution by a resin. The resulting leaching solution now free of scandium and containing notably magnesium and iron chlorides derivatives may be used for water treatment or acid regeneration.

Preferred resin used to recover or collect leached scandium (as well as rare-earth metals) includes adsorbent functionalized with glycol amic acid groups. It has been found that this resin works best for the selective recovery of scandium at concentration of about 2 molar (M), as it is generally the case after the leaching step of the DSO process. Collecting scandium with the resin is performed at temperature at least above about 80°C, i.e. after cooling the leaching solution which is generally operated at about 130°C.

Eluting scandium from the resin is performed at a temperature of about 80°C with a hydrochloric acid solution having a concentration of about 2M. The operating range is 20 to 80C. Preferably between 50 and 85C. For example, hydrochloric acid having a concentration about 18% as produced by acid regeneration according to the DSO process may be used for eluting scandium from the resin.

Then, the eluted scandium solution, which contains notably scandium(III) chloride (ScCl₃), is mixed with caustic soda (NaOH) to produce scandium hydroxide (ScOOH) at a temperature of about 100°C. Scandium hydroxide is thereafter dried and calcined in a kiln at a temperature over about 400°C to convert the scandium hydroxide into scandium(III) oxide (SczOs; scandia) according to the following chemical equation:

ScCl₃ + NaOH + H₂O → ScOOH + 2 HCl + NaCl

(reaction performed at about 100°C)

2 ScOOH + O₂ → Sc₂O₃ + H₂O

(reaction performed at above about 400°C).

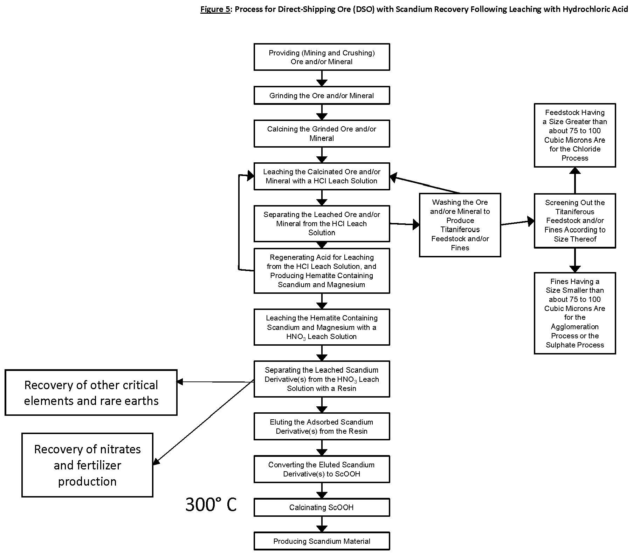

Referring now to Fig. 5, a block diagram illustrates an embodiment of a process for producing titaniferous feedstock and fines from titaniferous ore and/or mineral (DSO process), which includes extracting scandium derivatives from the titaniferous ore and/or mineral after leaching with hydrochloric acid.

The DSO process of the present embodiment comprises recovering scandium from a calcinated ore or mineral according to the present invention by leaching with hydrochloric acid, as described hereinbefore for the DSO process. In this case, hydrochloric acid treatment leaches out scandium, iron, and magnesium from the processed ore or mineral. The leached ore or mineral is then separated, such as by filtration, from the leaching solution containing notably iron, magnesium, and scandium, and is processed in accordance with the DSO process to produce titaniferous feedstock and/or titaniferous fines. For its part, the leaching solution containing notably iron, magnesium, and scandium is submitted to hydrochloric acid regeneration, as described hereinbefore, where hematite containing notably magnesium and scandium is produced. The resulting hematite is then leached with nitric acid, as described hereinbefore, to leach out scandium and magnesium present therein. During leaching of the resulting hematite with nitric acid, scandium is leached according to the following chemical equation:

Sc₂O₃ + 6 HNOs -> 2 Sc(NO₃)₃ + 3 H₂O.

At concentrations of nitric acid above 65% used for leaching, the acid principally acts as a passivation agent, such as to limit the amount of iron being leached. Nitric acid will principally leach the salt metals, such as magnesium, calcium, sodium, and lithium salt metals, in addition to scandium and rare-earth metals, including but not limited to cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), terbium (Tb), thulium (Tm), ytterbium (Yb), and yttrium (Y). The scandium so leached is recovered by and eluted from the resin, as described hereinbefore. Then, a high purity Sc₂O₃ material is produced according to the following chemical equation:

4 Sc(NO₃)₃ -> 2 Sc₂O₃ + 12 NO₂ + 3O₂

(reaction performed at about 300°C).

For their parts, critical elements and/or rare-earth metals may be collected by resins or by liquid-liquid extraction with organic solvents, as also described hereinbefore. Depending on the chemistry, the remaining solution by-products may be converted to fertilizer or magnesium oxide having a purity above about 90%. This same process may be applied to iron-rich resources with minor levels of scandium and other critical elements in order to enable a more economical recovery of scandium, as it may be the case with magnetite iron concentrates, nickel laterite tailings, and the like.

Advantageously, the DSO process that includes recovering scandium derivatives from the titaniferous starting material enables the recovery of scandium from resources that normally would not be processed. These resources generally have between 0.1% and about 0.5% Sc₂O₃ and large quantities of iron. Iron generally always leaches and enters the solution when leached with hydrochloric acid or sulfuric acid. In solution, iron consumes so much of the acid that it renders the recovery of scandium, rare-earth metals, and/or other critical elements economically unviable when not processed by the DSO process of the present invention. As such, the DSO process allows the opportunity to collect these important elements, which are usually found at such low concentration that their recovery is not economically profitably alone. According to the present invention, the reduction of the iron entering the solution, which thereby reduces acid consumption, in combination with the production of salable by-product (e.g. fertilizer) enables an economically profitable recovery of scandium, rare-earth metals, and/or other critical elements.

Still advantageously, the DSO process that includes recovering scandium derivatives from the titaniferous starting material further enables the recovery of scandium from tailings and other resources as well as simplification of purification steps and reduction of cross contamination with other acids such as hydrochloric acid.

### PROCESS FOR PRODUCING TITANIUM METALS AND TITANIUM ALLOYS

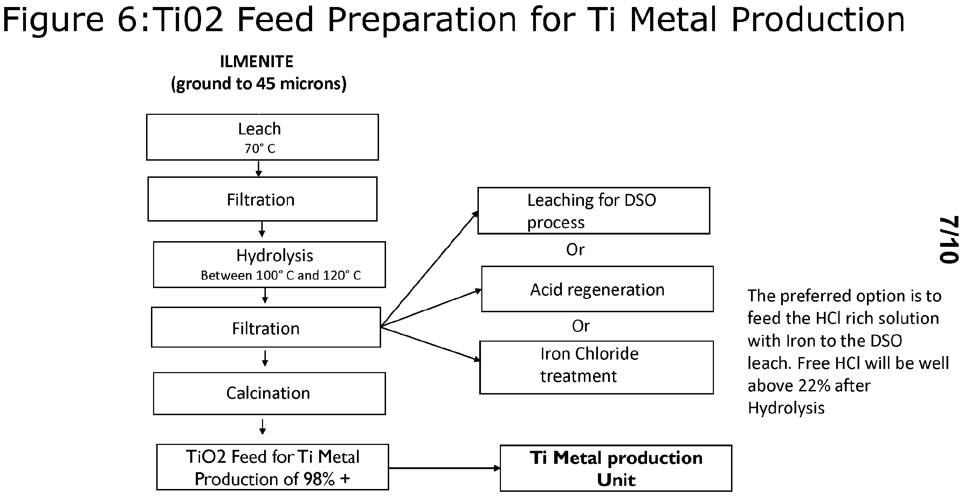

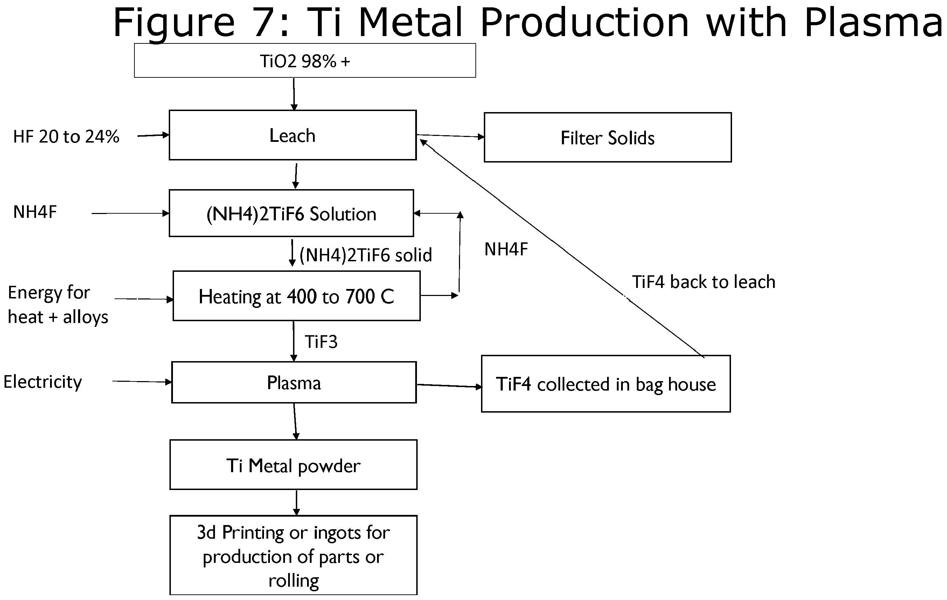

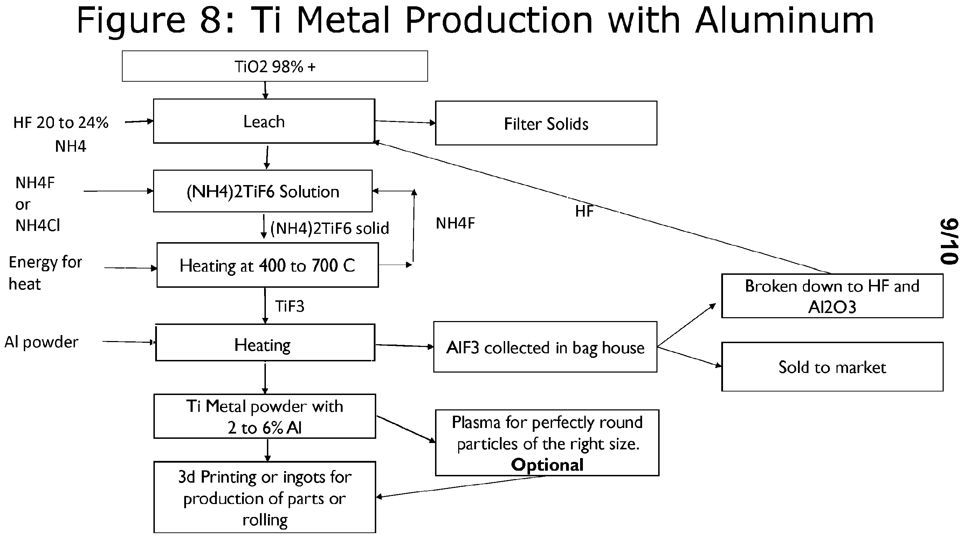

Referring now to Fig. 6, a block diagram illustrates an embodiment of a process for producing high-purity titaniferous feedstock used for titanium metal production. The high-purity titaniferous so produced may be used for the production of titanium metal(s) and alloy(s) thereof by a process involving contacting titanium fluoride derivatives with a plasma, illustrated in Fig. 7, or by a process involving contacting titanium fluoride derivatives with aluminum, illustrated in Fig. 8, as it will become apparent hereinafter.

Exemplary titaniferous starting material used according to the present invention for producing high-purity titaniferous feedstock comprises ilmenite, rutile, anatase, perovskite, brookite, pseudobrookite, sphene, and/or leucoxene, which are grinded to a particle size of about 45 cubic microns. Other exemplary titaniferous starting material comprise titaniferous feedstock and/or titaniferous fines produced according to the DSO process described hereinbefore, titaniferous slag (e.g. titaniferous slag from the smelting of ilmenite), and/or TiF₄ by-product recovered from the process for producing titanium metal with plasma, as illustrated in Fig. 7.

Referring back to Fig. 6, to produce high-purity titaniferous feedstock used for titanium metal production, titaniferous starting material is leached with hydrofluoric acid (HF) having a concentration between about 5% and about 60 %, preferably between about 20% and about 24%, and at a leaching temperature of about 70°C.

For example, when ilmenite is used as high-purity titaniferous feedstock, leaching is according to the following chemical formula:

FeTiOs +6 HF → Fe(TiF₆) + 3 H₂O.

Depending of the chemical nature of the ilmenite used as staring material, substantially large quantities of iron may be leached, which is not desirable. As the case may be, such leached iron may be removed from the leaching solution by liquid-liquid extraction using, e.g., DIBK, as described hereinbefore for the process for recovering vanadium.

Then the leached titaniferous starting material is separated from the leaching solution, such as by filtration. The leaching solution is heated to a temperature between about 100°C to 120°C.About 1% crystallizing agent, such as lithium, sodium and potassium chloride salt, preferably NH₄F (NH₄Cl, NH₄ are all options), is added thereinto to crystalize (NH₄)₂TiF₆. Generally, as more nuclei are added, the smaller the particle size are. By using the hydrolysed high purity TiO2 feed, ammonia and HF the first step normally produced is avoided of iron titanium fluoride. This also reduces the challenges of controlling the iron to be 99% Fe2+ in the solution. Fe3+ can be converted to Fe2+ with the addition of scrap iron or removed as in vanadium recovery with DIBK or MIBK solvent extraction. By avoiding iron entering the system as would be the case with ilmenite direct feed contaminants of iron, and other elements are avoided.

Advantageously, the high-purity titaniferous material produced according to the present invention and used for titanium metal and titanium alloys production enables a production of titanium(III) fluoride (TiF₃) which is compatible with aluminum or iron exchanges as well as with plasma production of titanium metal and alloys thereof with aluminum and vanadium.

Furthermore, such high-purity titaniferous material minimizes chemicals lost and enables a greener production with less energy than the conventional methods of using ilmenite directly for producing titanium metal and titanium alloys. In addition, the process for producing high-purity titaniferous material substantially reduces contaminants and impurities that affect the production of titanium(III) fluoride of sufficient purity for performing an ion exchange with aluminum or iron in a kiln and/or with a plasma reactor.

Referring now to Fig. 7, a block diagram illustrates an embodiment of a process for producing titanium metal and titanium alloy(s) involving contacting titanium fluoride derivatives with a plasma. The process of the present embodiment involves the pre-reduction of (NH₄)₂TiF₆ to a Tis+ species, conversion of the Ti₃+ species to TiF₃, and reduction of TiF₃ to titanium metal by plasma.

According to the present embodiment, titanium metal(s) and/or alloy(s) thereof is/are produced by leaching the high-purity titanium dioxide with hydrofluoric acid (HF) having a concentration between about 5% and about 60 %, preferably between about 20% and about 24%, and at a leaching temperature of about 70°C according to the following chemical formula:

TiO₂ + 6 HF → H₂(TiF₆) + 2 H₂O.

Optionally, any solid impurities or contaminants may be removed, such as by filtration, from the leaching solution.

Then, the leaching solution is heated to a temperature between about 100°C and about 120°C, or preferably about 108°C, and about 1% crystallizing agent, such as lithium, sodium and potassium chloride salt, but preferably ammonia (NH4/NH3) or derivitives such as NH4F or NH₄Cl, is added thereinto to crystalize (NH₄)₂TiF₆, as described hereinbefore for the process for producing high-purity titaniferous feedstock.

The (NH₄)₂TiF₆ is reduced with a reducing agent to produce Ti(lll) derivative(s). Exemplary reducing agents comprises aluminum, manganese, zinc, iron and magnesium. Alternatively, (NH₄)₂TiF₆ may be electrolytically reduced to produce Ti(lll) derivative(s), such as (NH₄)₃TiF₆, (NH₄)₂TiF₅, or NH₄TiF₄. The Ti(lll) derivative(s) is/are decomposed at temperature between about 400°C and about 700°C to produce TiF₃, which is after reduced to produce titanium metal.

Referring now to Fig. 8, a block diagram illustrates an embodiment of a process for producing titanium metal and titanium alloy(s) involving contacting titanium fluoride derivatives with aluminum. The process of the present embodiment involves the pre-reduction of (NH₄)₂TiF₆ to a Tis+ species, conversion of the Ti₃+ species to TiF₃, and reduction of TiF₃ to titanium metal by aluminum/iron exchange in a furnace. Generally speaking, the process for producing titanium metal(s) and alloy(s) thereof involving aluminum may be more convenient as compared to the process for producing titanium metal(s) and alloy(s) thereof depending on the alloy required and the percentage impurities of iron.

According to the present embodiment, titanium metal(s) and/or alloy(s) thereof is/are produced by leaching the high-purity titanium dioxide with hydrofluoric acid (HF) having a concentration between about 5% and about 60 %, preferably between about 20% and about 24%, and at a leaching temperature of about 70°C according to the following chemical formula:

TiO₂ + 6 HF → H₂(TiF₆) + 2 H₂O.

Optionally, any solid impurities or contaminants may be removed, such as by filtration, from the leaching solution.

The (NH₄)₂TiF₆ is reduced with aluminum to produce Ti(lll) derivative(s) and aluminum(III) fluoride (AlF₃) by heating the reduction product until AlF₃ on the surface of the titanium metal powder comprises between about 0,005% and about 40% of the mass of the material, preferably between about 0,05% and about 10%, and more preferably between about 0,1% and about 6,0%.

Alternatively, (NH₄)₂TiF₆ may be reduced with Al (Hg-activated) or with manganese (Mn) or iron (Fe) without the addition of an acid. Typical products of the reduction are NH₄TiF₄ and (NH₄)₃AlF₆ or (NH₄)₂TiF₅, and MnF₂. In the case of reduction with aluminum, the (NH₄)₃AlF₆ is more soluble and can be removed from the almost insoluble NH₄TiF₄ precipitate by acid filtration, and NH₄TiF₄ may then be decomposed at about 700°C to produce NH₄F_{(g)} and TiF₃₍ₛ₎.

NH₄F_{(g)} is recycled back for the reaction to make (NH₄)₂TiF₆.

In operation, the furnace arrangement and heating cycle are configured such that during heating the titanium and fluoride salt are always surrounded by an inert atmosphere, such as argon or helium, and are thus protected from reaction with oxygen, nitrogen, carbon, hydrogen or the like. Alternatively, the titanium metal precursor may be a deactivated titanium species.

Advantageously, since processes known to date used plasma and titanium wired feed to make 3D printing powder alloys of titanium metal, skipping the traditional titanium metal producing steps and feeding TiF₃ directly to the plasma unit operating, as provided by the present invention, substantially reducing total cost of ownership of the cycle of titanium metal powder for 3D printing.

The following reactions occur in the Plasma reactor:

4TiFs + energy → Ti + 3TiF₄

The TiF4 is recycled back to the leach reactor to be reconverted to (NH4)2TiF6 and then to TiF3. The plasma reactor with the high temperature and controlling the arc length can control the size of the titanium metal droplets for perfectly sized and spherical product perfect for 3D printing.

TiF₄ by-product is recovered and cycled back to the leaching step of the process for further leaching the titanium thereof according to the following chemical equation:

TiF₄ + 2 HF → H₂(TiF₆).

In an embodiment, titanium alloy(s) may also be produced, such as titanium-aluminum and titanium-vanadium alloys. To produce titanium alloy(s), a predetermined amount of a reducible fluoride salt of a first metal is combined with a predetermined amount of at least one reducible salt of another metal to produce a salt mixture, which is reduced to produce desired the metal(s) or alloy(s). Alternatively, the salt mixture may be smelted to produce the produce desired the metal(s) or alloy(s). Titanium metal production with aluminum ion exchange may be adjusted in the kiln to the right percentage of aluminum and vanadium powder. For example, excess aluminum may be added to the salt mixture to achieve between about 2% and 6% aluminum percentages, or sufficient amount of Na₃AlF₆ and Na₂VF₇ may be added to produce grade 5 titanium (which contains about 6% aluminum and about 4% vanadium). Other metal fluoride salts, such as AlF₃, VFs, VF₄ or VFs, may be added in various mount so that a variety of alloys can be prepared.

In an embodiment, the optionally purified (NH₄)₂TiF₆ of Option A may be reduced to NH₄TiF₄ with mercury activated aluminium. The NH₄TiF₄ may be converted to TiF₃, which may be reduced to titanium metal through a kiln with aluminum powder for ion exchange. The AlF₃ thereby produced may be collected in bag house, and TiF₃ may be processed through a plasma reactor to make titanium metal powder. The aluminum and/or the fluoride value(s) may also be recovered by steam hydrolysis at 400°C according to the following equation:

2 AlF₃ + 3 H₂O → Al₂O₃ + 6 HF.

The Ti metal powder if not perfectly suited for high end 3D printing applications can be fed through the plasma reactor to be converted to controlled size and shape. The advantage of making the metal in the kiln first is controlled chemistry with vanadium, aluminum additions to the titanium metal. This feed is then 100% Ti metal powder ready for 3 D printing versus 25% or less with a TiF3 feed.

To avoid needing to process through the plasma reactor, the precipitation of (NH4) ₂TiF6 is the key to controlling morphology and particle size for acceptable 3D printing quality. The starting material of purer TiO2 also helps reduce impurities that hamper the Ti metal production. Starting with almost pure TiO2, HF and ammonia alows products of high purity Ti metal, strategic additions to make Ti alloys as required. Many of the principals of nucleation additions and controlled hydrolysis provide the basis for shape and size control. More nuclei help produce particles of smaller size like less nuclei grow the starting the crystals.

If the purity of (NH₄)₂TiF₆ is compromised by iron, we can convert all iron to Fe3+ with Cl₂ gas and remove with the organic as explained with the Vanadium production. In our experience iron is not a problem starting with the 98% TiO2 feed but may build up with the closed circuits and require removal possibly every 20 cycles or so.

Advantageously, the present invention enables a more economical production of titanium metal(s) and alloy(s) thereof in powder or ingot form, as compared to the most common method of applying titanium wire through a plasma to produce titanium metal and alloys thereof with application, e.g., in 3D printing. Moreover, process of the present invention is greener than processes for producing titanium metal and alloys known to date in that it produces substantially fewer waste streams and converts all by-products into usable or salable products. Particularly, iron associated to ilmenite and titanium metal production is a source of problems and is addressed by combining titanium powder production with DSO process and conveniently converting iron units to a form like FeCl₃ for water treatment uses and or acid regenerated to recover HCl and produce hematite. The same for all the chemicals consumed in the process from HF, ammonia and aluminum to name a few.

Advantageously, the use of upgraded TiO₂ for the production of titanium metal(s)s and alloy(s) according to the present invention limits the iron challenges and enables a better control of the reactions and a greener foot print. Also, such use of upgraded TiO₂ renders much easier to control purity of the final product as only NH₄, NH4F or NH₄Cl is added during the process for precipitation purposes (NH4 and NH4F are preferred). In returns, this enables a better functioning of the kiln aluminum exchange and plasma operation. This also enables the cost-efficient production of titanium grades from 1 to 5.

Advantageously, the present invention provides the followings:
- preparation of high-purity titanium dioxide;
- leaching of titaniferous material with HF and recycling of by-products such as TiF₄;
- precipitation with ammonia;
- conversion to (NHa)zTiFs to TiFs; and
- conversion of TiF₃ to titanium metal with aluminum or plasma with addition of other metal to produced desired titanium alloy(s).

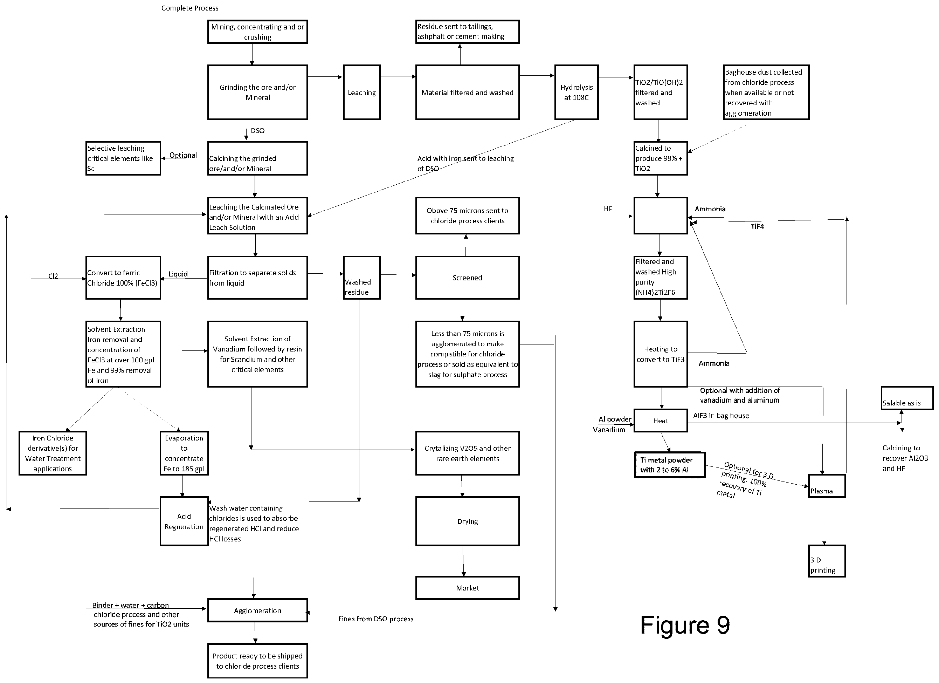

Referring now to Fig. 9, a block diagram illustrates how the embodiments of the present invention, namely the process for producing titaniferous feedstock (DSO process); the process for regenerating hydrochloric acid; the binder for agglomerating titaniferous fine; the process for agglomerating titaniferous fines; the process for separating vanadium derivatives from a leaching solution; the scandium recovery process from the DSO process and Iron rich sources; regenerating HCL acid during the process of scandium recovery process; the process for producing titanium metals and alloys; the process for producing titanium metals and alloys using plasma; the process for producing titanium metal and titanium using aluminum exchange; and use of any of these processes for 3D printing may be all linked together.

While preferred embodiments have been described above and illustrated in the accompanying drawings, it will be evident to those skilled in the art that modifications may be made without departing from this disclosure. Such modifications are considered as possible variants comprised in the scope of the disclosure.

### EXAMPLE

### Production of Titanium From Ilmenite Via AI(Hg) Reduction of (NH₄)₂TiF₆

### STEP 1: Digestion of Ilmenite

### Feedstock Material

Ilmenite concentrate can range from 30% TiO2 to 53% TiO2 to make the 98.5% TiO2 feed. The ilmenite used had the following chemistry:

| **Element** | **Typical target value Weight %** |
|---|---|
| TiO₂ | >48 |
| Fe oxides_{TOT} | 45-50 |
| SiO₂ | 1-2% |
| MnO | 0.5 |
| MgO | < 0.7 |
| Al₂O₃ | <0.5 |
| CaO | <.25 |
| P₂O₅ | <.01 |
| Cr₂O₃ | <0.1 |
| V₂O₅ | <0.1 |

with an average size of 106 microns.

### Stoichiometry: HF required for 500g of ilmenite feedstock

The ilmenite was digested in 22% HCl (both iron and titanium are in solution). The reactions are controlled to not exceed 30 gpl of Ti. The non digested material is filtered. Nuclei are added at approximately 1% and the solution is heated to 108 C for approximately 30 minutes with vigorous mixing thereby precipitating out the TiO2 feed. This material is calcined at 800C for removal of hydroxides and water. The chemistry is 98.5% TiO2. This is then digested in the HF. The total amount of HF required was therefore (2,95 + 0,19 + 0,21) x6 = 20,1 mol for the 98% feedstock.

However, to ensure complete digestion, an excess of 10% TiO2 feed was used during digestion. The filtered solids can be recycled back to the next batch.

After 2 hours, Fe (12g; steel wool) or beads of aluminum was added to the solution and the mixture was stirred for 1 hour to reduce all soluble Fe(lll) to Fe(II).

The suspension was then filtered and washed with tap water (2 x 50mL). Approximately 200g of moist filter cake was obtained. This material was re-slurried to recover most of the excess ilmenite and a leachate of 1375mL containing FeTiF6 was obtained.

### Extraction Efficiency

The Ti concentration in the leachate was approximately 100g/L implying a Ti recovery of 137.5g. The recovery efficiency was calculated as follows:

### STEP 2: Selective Precipitation of (NH₄)₂TiF₆

The leachate (2,000L) contained Ti (200g; 2,865 mol). This required NH₄Cl (4 x 2,865 = 11,46 mol; 891.80 g).

NH₄Cl (892g) was slowly added to the MTiF₆ solution of step 1 (2000mL) while stirring vigorously at 108 C. The solution was cooled to roomtemperature and stirred for 1 hour.

The resulting crystalline (NH₄)₂TiF₆ was filtered and pressed inside the filter head to remove as much excess liquid as possible. The filer cake was washed with cold water and vacuumed.

The crystalline (NH₄)₂TiF₆ with approximately 8% moisture was then dried at 60°C.

### Precipitation Efficiency

Based on a (NH₄)₂TiF₆ crystalline product with a higher purity due to selective precipitation of TiO2 from HCl solution to redigest with HF has a greener foot print to allow the use of the iron chlorides or acid regeneration as well as very low impurities eliminating the need for steps such as iron reduction and precipitation of Na₂SiF₆ and Na₃AlF₆ with NaCl reduction. f 100% (522g = 2.631 mol Ti), the efficiency of Ti recovery was 92%. The precipitated dried (NH₄)₂TiF₆ is ready to make titanium metal

### Recrystallisation of (NHa)zTiFs

(NH₄)₂TiF₆ (400g), produced as described above and dried at 60°C, was added to water (500mL) in a 2L vessel. It was found that anhydrous (NH₄)₂TiF₆ has a greater solubility than hydrated or moist (NH₄)₂TiF₆•xH₂O A small piece of Al strip (approx. 100 mm x 25 mm) was added to the suspension.

While stirring, HF (0,5mL; 40%) was added to the suspension to prevent hydrolysis and to initiate the reduction of a small amount of Ti(IV) with Al. The suspension was heated to boiling point (approx. 100°C). Any foam which formed on top of the solution decreased with time and was mixed into the solution.

The color of the solution changed to light violet, indicating the presence of Ti(III). This also indicated that all of the iron present was in the form of Fe(II). When the solution boiled, a layer of violet TiF₃ poisoned the Al strip and the reduction stopped. The formation of a small amount of (NH₄)₃AlF₆ arising from the addition of the aluminum strip did not present a problem as this product is produced as a by-product in the following step 3. After the solution had boiled for about 1 minute, it was removed from the heat source and allowed to cool. The Al strip could then be removed and reused (without cleaning) in the next run.

The vessel was cooled to about 40°C with cold water, and ice and cold water were then used to cool the vessel to 10°C while stirring the resulting crystalline (NH₄)₂TiF₆.

The crystalline product was filtered and pressed inside the filter head to remove as much excess liquid as possible. The vacuum was then broken and ice water (50mL; 5°C) was added to the crystalline product. The vacuum could be restored only after the water had penetrated the filter cake (approximately 2 minutes later) and the crystalline product had the appearance of icing-sugar. The crystalline product was then sucked and pressed as dry as possible.

The resulting crystalline (NH₄)₂TiF₆ was dried at 60°C. The yield was typically about 70% of the crystalline feedstock product without evaporation of additional water.

A crude but reliable way to test the purity of the dried crystalline (NH₄)₂TiF₆ was to add the product (approx. 5g) to CP grade HCl (approx. 25 mL; 32%) in a 50 mL glass beaker. After standing for about 5 minutes, the HCl turned yellow or orange if any iron was present. Concentrated HCl is very sensitive to iron and the intensity of the yellow or orange color was directly proportional to the iron concentration at concentration levels between about 1% and 0.01% Fe. This test was carried out on the feedstock product, recrystallized product, and (NH₄)₂TiF₆ standard.

### STEP 3: Reduction of (NH₄)₂TiF₆ with Al(Hg) Activation of Al With Hg

Aluminum buttons (ID approximately 10-15mm, 1-3mm thick, 150g) were covered with a 1 N NaOH solution in a 500mL plastic beaker and Hg (approximately 50mL) was added. The buttons were mixed using a plastic stirrer and dipped into the Hg. After about 5 minutes, the buttons were completely coated with Hg.

The sodium hydroxide was removed by rinsing the buttons with a strong flow of tap water inside the beaker for about 1 minute.

The excess Hg was then poured from the Hg-coated buttons through a 500 microns screen and the buttons were immediately covered with acetone. After about 1 - 2 hours in acetone, further free Hg dropped from the buttons, leaving only a micro layer of Hg on the buttons.

When ready to use, the AI(Hg)-buttons were screened (500 micons) from the acetone and free Hg, and immediately dropped into the (NH₄)₂TiF₆ solution as described below.

### Reduction

In a 2L vessel, the recrystallized (NH₄)₂TiF₆ from step 2 (500g) was dissolved in tap water (1.5L). The temperature was raised to 30°C and a clear solution was obtained.

The AI(Hg)-buttons (150g) prepared as described above were added to the (NH₄)₂TiF₆ solution, while stirring (no vortex). The reaction was exothermic and the temperature rose from 30 to 70°C over a period of 75 minutes. After 15 minutes at 70°C, the suspension was cooled to below 30°C and filtered.

The AI(Hg)-buttons were rinsed with water and stored in acetone. The violet precipitate was filtered and sucked as dry as possible and washed with water (2 x 50mL).

The violet precipitate was dried at 60°C (yield 475g). The product consisted of NH₄TiF₄ and (NH₄)₃AlF₆ in a weight ratio of approx. 75%:25%. NH₄TiF₄ has a low solubility in dilute HF and an even lower solubility in concentrated HF. In this way, if necessary, the (NH₄)₃AlF₆ (and other impurities) could be washed out of the product.

### STEP 4: Decomposition of NH₄TiF₄ and (NH₄)₃AlF₆

The reduction product from step 3, consisting of a mixture of NH₄TiF₄ and (NH₄)3AlF₆, was decomposed at 600°C under a nitrogen or argon atmosphere in a mild steel rotary. After 2-4 hours of soaking, the light brown-maroon product, consisting of TiF₃ and AlF₃, was completely free of NH₄F which had evaporated. The evaporated material was condensed and collected. It was found that, if traces of NH₄F remained, TiN formed during the reduction with Al at 750°C.

Depending on the ratio between NH₄TiF₄ and (NH₄)₃AlF₆, the yield of the decomposed product was typically between 60 and 70% of the feed.

### STEP 5: Reduction of TiF₃ With Al and Sublimation of AlF₃

After determining the ratio between TiF₃ and AlF₃ in the product produced in step (4), Al-powder (600°C if the inert AlF₃ layer is present. When the powder is melted or sintered (powder metallurgy) the AlF₃ layer will sublime and not contaminate the titanium product.

It was also found that a metal crust formed on top of the Ti-powder at 1250°C. It is believed that this crust contains metal impurities which migrated with the AlF₃ gas to the surface of the powder and precipitated there as the AlF₃ sublimed, analogous to zone refining.

After reduction at 750°C, the temperature was raised to 1250°C, still under an argon atmosphere. At this temperature the AlF₃ sublimed and was condensed and collected as a pure by-product. When the production of white fumes stopped, the sublimation was complete. Depending on the batch size and surface area, soaking at this temperature was between 2 and 10 hours. After cooling, the product Ti-powder was collected.

The Applicant has found that complete sublimation of AlF₃ may be undesirable and that it is preferable to leave a trace amount (0.1 - 5%) to coat the Ti-powder. It was found that this fluoride coating protected the powder and increased safety when handling and transporting the powder. Prior art commercial Ti-powders have a spontaneous combustion temperature of approximately 250°C in air. However, this temperature is increased to >600°C if the inert AlF₃ layer is present. When the powder is melted or sintered (powder metallurgy) the AlF₃ layer will sublime and not contaminate the titanium product.

It was also found that a metal crust formed on top of the Ti-powder at 1250°C. It is believed that this crust contains metal impurities which migrated with the AlF₃ gas to the surface of the powder and precipitated there as the AlF₃ sublimed, analogous to zone refining.

### STEP 6: Melting of Ti-Powder

The Ti-powder produced in step (5) was pressed inside a zirconia lined clay crucible and melted in an induction furnace under an argon atmosphere. It readily melted to form a small ingot and a trace amount of AlF₃ in the form of fumes was produced. The Ti-powder or metal produced in this way contained very low levels (< Ti-grade 1) of oxygen, nitrogen, carbon and hydrogen due to the fluoride protection described above.

The process of the invention allows Ti to be produced by reduction with Al without the formation of Al-Ti alloys. Although the XRDs (not shown) of the Ti-powder after reduction appear to reveal the presence of the AlTi₃ phase (instead of Ti phases only), the Applicant believes that the AITis phase is only a pseudo AlTi₃ phase and that there is, in fact, no Al present. The reason why the "Tis" has the AITis crystal structure is because it was "born" from Al and, at the low temperature used (80%. Higher yields (greater than 90%) were produced when the process was scaled up.

Unexpectedly, it was found that (NH₄)₂TiF₆ was not produced if the order of the reaction was reversed. If the crude anatase pulp was first digested in HF to produce aqueous H₂TiF₆ and the ZnO was then slowly dissolved in the H₂TiF₆ solution, a clear solution was produced. However, when NH₄Cl₍ₛ₎ was added to the solution, the Ti did not precipitate as (NH₄)₂TiF₆ but instead, hydrolysis to a white insoluble precipitate occurred.

Some further aspects of the invention can be found in the following paragraphs:
1. A process for producing a titaniferous feedstock of 75 cubic microns or larger from a titaniferous ore or mineral and agglomerating titaniferous fines or titaniferous material, the process comprising the steps of:
   a) calcinating titaniferous particles having a size of at least about 75 cubic microns at a temperature between about 750°C and about 1250°C during between about 30 minutes and about 8 hours;
   b) leaching the titaniferous particles, in at least one leaching cycle, with a leaching solution; and
   c) separating the titaniferous particles from the leaching solution to produce the titaniferous feedstock, and a separated leaching solution;
   d) recovery of vanadium, scandium and rare-earths from leach solutions; further comprising the agglomeration steps of:
      i) coating a titaniferous particles having a size of less than about 75 cubic microns with coal and/or carbon to produce carbon-coated particles having between about 30% (w/w) and about 40% (w/w) carbon;
      ii) coating the carbon-coated particles with between about 0.1% (w/w) and about 3% (w/w) of a binder composition used for agglomerating titaniferous feedstock, to produce binder-coated particles;
      iii) pelletizing the binder-coated particles to produce agglomerated pellets; and
      iv) using the agglomerated pellets for the chloride process operated at 1000 º to 1100 º C, wherein the binder comprises:
         - Sodium (Na): between about 4% and about 15%;
         - Carboxylic acid: between about 35% and about 90%;
         - Calcium (Ca): between about 1% and about 3%;
         - Potassium (K): between about 1% and about 2%;
         - Carbonates: between about 4% and about 5%; and
         - Lignin: between about 8% and about 15%,
   and wherein the binder is able to withstand temperatures up to 1200ºC.
2. The process of paragraph 1, further comprising the step e) before the step a):
   e) grinding the titaniferous ore or mineral into the titaniferous particles having a size of at least about 75 cubic microns.
3. The process of paragraph 1, further comprising the step f) after the step c):
   f) washing the titaniferous feedstock with water and/or steam to remove remaining leaching solution in at least one washing cycle.
4. The process of paragraph 1, further comprising the step g) after the step c):
   g) sorting the titaniferous feedstock according to size, wherein the titaniferous feedstock larger in size than about 75 cubic microns are adapted for use by the chloride process, and wherein the titaniferous feedstock smaller in size than about 75 cubic microns are adapted for use by the sulfate process as is or agglomerated to meet the requirements of the chloride process.
5. The process of paragraph 4, wherein the titaniferous feedstock size is adapted so that between about 5% (w/w) and about 25% (w/w) of the total leaching solution weight remains trapped into the particles after the leaching.
6. The process of paragraph 1, wherein step a) comprises calcinating in the presence of between about 0.1% and about 3% oxygen and temperature control to produce anatase crystals.
7. The process of paragraph 1, wherein selective leach with nitric acid to recover rare-earths and scandium while minimizing the amount of iron leached and wherein selective leach to clean ilmenite and synthetic rutile of problem salt metals such as Mg, Ca, Na among others that is a problem for chloride process. The selective leach avoids leaching iron that is inevitable with HCl and H₂SO₄ and avoids the need for handling the iron in solution be it through precipitation or acid regeneration.
8. The process of paragraph 1, further comprising the steps h) to r) after the step c):
   h) heating the separated leaching solution to a temperature between about 80°C and about 120°C, preferably about 108°C, for between about 30 minutes and about 45 minutes, wherein the separated leaching solution comprises a soluble titaniferous material;
   i) preparing a crystallization agent,
   j) adding the crystallization agent at a concentration of about 1% to the separated leaching solution to crystallize the soluble titaniferous material into titaniferous crystals;
   k) separating the titaniferous crystals from the separated leaching solution;
   l) drying the titaniferous crystals to remove hydroxides and chlorides;
   m) recovering titanium dioxide fines;
   n) Liquid liquid separation for iron removal with DIBK organic. Fe²⁺ converted to Fe³⁺ with Cl₂ gas. Removal of 99.9% of iron.
   o) Recovering vanadium with liquid liquid separation with organics;
   p) Recovering scandium with resin (scandium can be recovered in iron rich solution as well);
   q) Recovering rare earths with resin; and
   r) FeCl₃ for water treatment or acid regeneration.
9. The process of paragraph 8, wherein the crystallization agent is titanium dioxide nuclei.
10. The process of any one of paragraphs 8 and 9, wherein the titanium dioxide fines selected have a size between about 5 cubic nanometer and 75 cubic nanometers, and a purity of between 65% and about 98.5%.
11. The titanium dioxide fines of any one of paragraphs 8 to 10 adapted to be grown in a calciner to a range between about 100 cubic nanometers to about 250 cubic nanometers.
12. The process of paragraph 1, further comprising the step r) after the step c):
   s) drying the titaniferous feedstock to remove hydrates.
13. The process of paragraph 1, wherein the titaniferous feedstock produced has between about 70% and about 99% titanium dioxide content.
14. The process of paragraph 1, wherein at least 80% of the titaniferous feedstock produced has a particle size of at least 75 cubic microns.
15. The process of paragraph 1, wherein the titaniferous feedstock produced has less than about 0.3% magnesium content.
16. The process of paragraph 1, wherein the titaniferous feedstock produced is grown in a calciner to a range between about 100 cubic nanometers to about 250 cubic nanometers, preferably about 200 cubic nanometers.
17. The process of paragraph 1, wherein the titaniferous feedstock and/or fines are adjusted in size and purity requirements for use in other processes.
18. The process of any one of paragraphs 1 to 17, wherein the calcination is performed in the presence of gaseous oxygen (O₂(g)) at a temperature below 900°C to produce titanium dioxide in the form of anatase and to convert the magnetite into hematite.
19. The process of any one of paragraphs 1 to 18, wherein the leaching solution comprising between about 16% and about 40% hydrochloric acid at a temperature between about 60°C and about 160°C, and wherein the leaching period comprises a period of time between about 15 minutes and about 6 hours.
20. The process of paragraph 19, wherein the leaching solution comprises between about 16% and about 40% hydrochloric acid at a temperature between about 880°C and about 1100°C.
21. The process of paragraph 19, wherein the leaching time is between about 30 minutes and about 1 hour.
22. The process of any one of paragraphs 19 to 21, wherein the leaching concentrations of the hydrochloric acid is sufficient to combine with the impurities and contaminants in the solution and form soluble chlorides derivatives that is between about 16% (w/w) and about 40% (w/w), between about 18% (w/w) and about 37.5% (w/w), between about 18% (w/w) and about 36% (w/w), between about 25% (w/w) and about 37% (w/w), between about 30% (w/w) and about 40% (w/w), between about 30% (w/w) and about 37.5% (w/w), between about 18% (w/w) and about 25% (w/w), or between about 30% (w/w) and about 36% (w/w).
23. The process of any one of paragraphs 19 to 21, wherein the leaching concentrations of the hydrochloric acid is sufficient to combine with the impurities and contaminants in the solution and form soluble chlorides derivatives that is between about is between about between 18% (w/w) and about 22% (w/w), or between about 20% (w/w) and about 22%(w/w).
24. The process of paragraph 1, wherein the separated leaching solution of step c) comprises iron(II) chloride and/or iron(III) chloride, the hydrometallurgical process further comprising the steps t) to y) after the step c):
   t) converting iron(II) chloride and/or iron(III) chloride into hematite;
   u) optional to remove iron (III) with DIBK organics to recover vanadium;
   v) optional to recover rare earths with resins or organics from the solution;
   w) regenerating hydrochloric acid, wherein the regenerated hydrochloric acid has a concentration between about 15% and about 20%, preferably about 18%;
   x) converting hematite and remaining magnetite into iron(III) chloride; and
   y) cycling the hydrochloric acid back into hydrometallurgical process of paragraph 1.
25. Use of the process of any one of paragraphs 1 to 24 to produce Iron Chloride derivatives for use in water treatment applications.
26. The process of any one of paragraphs 1 to 25, wherein the titaniferous feedstock and/or titaniferous fines have between about 70% (w/w) and about 99% (w/w), between about 80% (w/w) and about 99% (w/w), between about 70% (w/w) and about 85% (w/w), between about 80% (w/w) and about 90% (w/w), or between about 85% (w/w) and about 92% (w/w) titanium dioxide content.
27. The process of paragraph 1, further comprising the steps v) and vi) after step iv):
   v) indurating the agglomerated pellet at temperatures between about 40°C and about 100°C, or preferably at about 60°C, for a period of time ranging between about 2 hours and about 24 hours;
   vi) drying the agglomerated pellet.
28. The process of paragraph 1, wherein the agglomerated pellet has at least about 70% titanium dioxide content.
29. The process of paragraph 1, wherein the agglomerated pellet is adapted in size for use by the chloride process.
30. The process of paragraph 1, wherein the agglomerated pellet has a carbon content adapted for use by the chloride process.
31. The process of paragraph 1, wherein the agglomerated pellet has a maximum of 0.3% (W/W) content of metal salts.
32. The process of paragraph 1 further comprising a single coating step, wherein the titaniferous fines or material having a size of less than about 75 cubic microns with coal and/or carbon to produce a carbon-coated feedstock having between about 30% (w/w) and about 40% (w/w) carbon, and the carbon-coated feedstock with between about 0.1% (w/w) and about 3% (w/w) is coated with the binder to produce a binder-coated feedstock.
33. The process of paragraph 1, wherein the agglomerated pellet have a size of 1/8 cubic inch and about ½ cubic inch, and preferably, a size between about ¼ cubic inch and about ½ cubic inch.
34. The process of paragraph 1, wherein the agglomerated pellet are resistant to degradation, physical and chemical degradation forces associated with transport and handling and temperatures associated with the chloride process and the fluidized bed reductive chlorination processing.
35. The process of any one of paragraphs 1 and 34, wherein the binder is modified to prevent picking up humidity.
36. A process for separating a soluble vanadium derivative, rare earths and scandium from a leaching solution, wherein the leaching solution comprises iron (II) chloride and/or iron(III) chloride, the process comprising the steps of:
   a) extracting iron (II) chloride and/or iron(III) chloride from the leaching solution by liquid-liquid extraction with a solvent mixture comprising between about 15% and about 25% diisobutyl ketone (DISK) and/or methyl isobutyl ketone (MIBK), between about 50% and about 70% EXXAL-13, and between about 10% and about 30% ShellSol^{™} D-80;
   b) extracting the soluble vanadium derivative from the leaching solution by liquid/liquid extraction with a solvent mixture comprising between about 10% and about 30% Cyanex 923, between about 10% and about 30% EXXAL-13, and between about 50% and about 70% CF 231 to produce a vanadium derivative-containing liquid/liquid extraction phase; and
   c) extracting the soluble scandium derivative and other rare earths from the leaching solution by liquid/liquid extraction with a adsorbent functionalized with glycol amic acid groups. Scandium recovery is performed at a concentration ranging from 5 to 12% HCl, as it is generally the case after the leaching step of the DSO process. Collecting scandium with the resin is performed at temperature at least above about 80°C, i.e. after cooling the leaching solution which is generally operated at about 130°C.
37. The process of paragraph 36, further comprising the step d):
   d) adding a precipitation agent to the vanadium derivative-containing liquid/liquid extraction phase to precipitate a vanadium derivative precipitate.
38. The process of paragraph 37, further comprising the step e) after the step d):
   e) separating the vanadium derivative precipitate from the vanadium derivative-containing liquid/liquid extraction phase.
39. The process of paragraph 38, further comprising the step f) after the step e):
   f) calcinating the vanadium derivative precipitate to remove hydrates.
40. The process of paragraph 36, wherein the ratio of solvent mixture to leaching solution used for the liquid-liquid extraction is about 0.25, 0.50, 0.75, or about 1, wherein said ration is adjusted depending on the concentration of iron chloride derivatives contained in the leaching solution.
41. The process of paragraph 36, wherein the liquid-liquid extraction is adapted to achieve about 99% of total iron removal and produces a high-purity iron stream of about 99.9% purity.
42. The process of any one of paragraphs 36 to 41 for selectively separating magnesium or resources selected from the group consisting of cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y).
43. The process of paragraph 42 for selectively collecting Iron(III) chloride from the leaching solution, wherein the Iron(III) chloride is at a concentration between about 100gpl and about 120gpl without evaporation.
44. The process of any one of paragraphs 36 to 43, wherein the solvent mixture has a flash point of at least 70°C.
45. A process for separating a soluble scandium or a rare-earth derivative from a titaniferous ore or mineral, the process comprising the steps a) to f):
   a) calcinating titaniferous particles having a size of at least about 75 cubic microns at a temperature between about 750°C and about 1250°C during between about 30 minutes and about 8 hours;
   b) leaching the titaniferous particles with a leaching solution to produce leached scandium or rare-earth derivatives;
   c) separating the leached scandium or rare-earth derivatives from the leaching solution with a resin at a temperature between about 80°C and about 130°C;
   d) eluting soluble scandium or rare earth derivatives from the resin at a temperature of between about 20°C and 80°C, preferably between 50°C and 85°C, with a hydrochloric acid solution having a concentration between about 2M and about 6M;
   e) Mixing the soluble scandium or rare-earth with caustic soda or sodium hydroxide to produce scandium or rare-earth hydroxide at a temperature of about 100°C; and
   f) calcinating the scandium hydroxide or rare-earth at a temperature of about 400°C to produce scandium(III) oxide or rare-earth oxide.
46. A process for selectively leaching out impurities from titanium rich slag, which comprises:
   a. grinding slag (synthetic rutile) from smelting process to 150 microns and generally has a chemistry of 80% TiOz and MgO of 2 to 5%;
   b. leaching for 4 hours at between room temperature to 115ºC with 65% Nitric acid which attacks Mg, Ca and its derivatives without affecting TiO2 and iron oxides;
   c. TiO₂ rich material is filtered as solids and washed;
   d. TiO₂ filter cake is dried at 60ºC to produce a synthetic rutile with less than 0.3% MgO ready to be used by the chloride process industry of pigment production;
   e. the used solution of step b for selective leaching of the impurities is sent to fertilizer plant to produce nitrate, phosphate, and potassium combinations of fertilizer with Mg rich solution.
47. The process of paragraphs 45 and 46 wherein the leaching solution is nitric acid having a concentration between about 15% (w/w) and about 75% (w/w), between about 35% (w/w) and about 70% (w/w), or between about 55% (w/w) and about 65% (w/w).
48. The process of any one of paragraphs 45, 46, and 47, wherein the leaching solution further comprises a concentration of about 65% (w/w).
49. The process of paragraph 45 wherein the leaching solution is hydrochloric acid having a concentration between about 18% and about 22% hydrochloric acid.
50. The process of any one of paragraphs 45 and 47 to 49, wherein the resin is an adsorbent functionalized resin with glycol amic acid groups.
51. Use of the process of any one of paragraphs 45 to 50 for producing Iron Chloride derivatives for water treatment.
52. Use of the process of any one of paragraphs 45 to 51 for producing titaniferous feedstock and/ or fines.
53. A process for separating a soluble scandium or rare-earth derivative from a titaniferous ore or mineral, the process comprising the steps a) to f):
   a) calcinating titaniferous particles having a size of at least about 75 cubic microns at a temperature between about 750°C and about 1250°C during between about 30 minutes and about 8 hours;
   b) leaching the titaniferous particles with a leaching solution comprising hydrochloric acid to produce a leached solution containing scandium or rare-earth derivatives, iron and magnesium;
   c) separating leached scandium or rare-earth derivatives by filtration;
   d) submitting the leached solution to hydrochloric acid regeneration to produce hematite;
   e) leaching the hematite with a leaching solution comprising nitric acid at a concentration above 65%; and
   f) eluting soluble scandium or rare-earth from a resin contacted with a leaching solution comprising nitric acid at a concentration above 65%.
54. The process of paragraph 53, wherein the resin is an adsorbent functionalized resin with glycol amic acid groups.
55. The process of paragraph 53, further comprising a step g) after step b):
   g) separating the leached titaniferous particles from the leaching solution to produce the titaniferous feedstock and/or fines.
56. The process of paragraph 53, further comprising a step h) after step e):
   h) eluting critical elements and / or rare-earth metals from resins or by the liquid-liquid extraction according to any one of paragraphs 39 to 47.
57. Use of the process of any one of paragraphs 53 to 56 for producing fertilizer.
58. Use of the process of any one of paragraphs 53 to 56 for producing fertilizer nitrates, nitrate phosphates, nitrate phosphate and potassium chemistries that are regularly used by households and agriculture.
59. Use of the process for high end fertilizer producing nitrate magnesium, nitrate phosphate magnesium, nitrate phosphate potassium magnesium chemistries that are commonly used for example for almonds and pomegranate (but not limited to these 2).
60. Use of the process of any one of paragraphs 53 to 56 for producing magnesium oxide having a purity of about or above 90%.
61. The process of any one of paragraphs 53 to 60, wherein soluble scandium or rare-earth is derived from an iron rich source having low or minor levels of scandium or rare-earth.
62. The process of paragraph 61, wherein the iron rich resource is selected from the group consisting of magnetite iron and nickel laterite tailings.
63. A process for producing titanium dioxide feedstock for use in the production of titanium metals and alloys, the process comprising the steps a) to e):
   a) obtaining a titanium dioxide starting material;
   b) leaching of titanium dioxide particles with a leaching solution having hydrofluoric acid (HF) at a concentration between about 5% and about 60 % and at a leaching temperature of about 70°C;
   c) filtering out solids;
   d) heating the leaching solution to temperature between about 100°C and 120°C; and
   e) crystalizing (NH₄)₂TiF₆ by adding a crystalizing agent of about 1% in concentration, wherein the crystalizing agent is selected from the group consisting of lithium, sodium, and chloride salts thereof, potassium chloride salt, NH₄F, NH₄ and NH₄Cl.
64. The process of paragraph 63, wherein the hydrofluoric acid (HF) in the leaching solution is at a concentration between about 20% and about 24%.
65. The process of paragraph 63, wherein the leaching solution is heated at about 108°C.
66. The process of paragraph 63, wherein the crystalizing agent is NH₄F.
67. The process of any one of paragraphs 63 to 66, wherein the titaniferous starting material is selected from the group consisting of ilmenite rutile, anatase, perovskite, brookite, pseudobrookite, sphene, leucoxene, titaniferous feedstock or titaniferous fines produced according to the Direct-Shipping Ore (DSO) process, titaniferous slag from the smelting of ilmenite and TiF₄ by-product.
68. The process of any one of paragraphs 63 to 66, further comprising a step f) after step c):
   f) removing leached iron from the leaching solution by liquid-liquid extraction.
69. Use of the process of any one of paragraphs 63 to 67 for producing Iron Chloride derivatives for water treatment.
70. Use of the process of any one of paragraphs 63 to 67 for producing starting material for the DSO process.
71. Use of the process of any one of paragraphs 63 to 67 for producing titanium(III) fluoride (TiF3).
72. A process for producing titanium metal, titanium metal alloys, titanium and 3D printing quality for titanium metal and its alloys, the process comprising the steps a) to f):
   a) leaching a high-purity titanium dioxide with leaching solution having hydrofluoric acid (HF) at a concentration between about 5% and about 60 %, and at a leaching temperature of about 70°C
   b) heating the leaching solution to temperature between about 100°C and about 120°C;
   c) crystalizing (NH₄)₂TiF₆ by adding a crystalizing agent of about 1% in concentration, wherein the crystalizing agent is selected from the group consisting of lithium, sodium, and chloride salts thereof, potassium chloride salt, NH₄F, NH₄ and NH₄Cl;
   d) performing a pre-reduction of (NH₄)₂TiF₆ to produce Ti(III) derivatives by
      d.1) using a reducing agent to reduce (NH₄)₂TiF₆; or
      d.2) electrolytically reducing (NH₄)₂TiF₆;
   e) decomposing the Ti(III) derivatives at a temperature between about 400°C and about 700°C to produce TiF₃; and
   f) reducing the TiF₃ to titanium metal powder by contacting TiF₃ with a plasma atomization technology.
73. The process of paragraph 72, wherein the hydrofluoric acid (HF) in the leaching solution is at a concentration between about 20% and about 24%.
74. The process of any one of paragraphs 72 and 73, wherein slag impurities are removed from the leaching solution by filtration.
75. The process of any one of paragraphs 72 to 74, wherein the leaching solution is heated at about 108°C.
76. The process of any one of paragraphs 72 to 75, wherein the crystalizing agent is NH₄Cl.
77. The process of any one of paragraphs 72 to 76, wherein the reduction agent is selected from the group consisting of aluminum, manganese, zinc, iron and magnesium.
78. The process of any one of paragraphs 72 to 77, wherein Ti(III) derivatives comprise (NH₄)₃TiF₆, (NH₄)₂TiF₅, or NH₄TiF₄.
79. The process of any one of paragraphs 72 to 78 further comprising a step g) after step f):
   g) recovering TiF₄ by-product to cycle it back into the leaching solution for further leaching.
80. A process for producing titanium alloys, wherein titanium alloys are produced by reducing a salt mixture of a predetermined amount of a reducible fluoride salt of a first metal with a predetermined amount of at least one reducible salt of another metal, and
   wherein Fe²⁺ and Fe³⁺ generated in the process are removed with Cl₂ gas by converting the iron units into the form of FeCl₃ for water treatment or acid regeneration.
81. The process of paragraph 80, wherein the salt mixture is smelted to produce a desired titanium alloy.
82. The process of any one of paragraphs 80 and 81, wherein the titanium alloys are titanium-aluminum and titanium-vanadium.
83. The process of any one of paragraphs 80 to 82, wherein the fluoride salt is selected from the group consisting of Na₃AlF₆, Na₂VF₇, AlF₃, VF₅, VF₄ and VF₃.
84. A process for producing titanium metal and titanium, the process comprising the steps a) to f):
   a) using a high purity titanium dioxide as a metal precursor;
   b) leaching a high-purity titanium dioxide with leaching solution having hydrofluoric acid (HF) at a concentration between about 5% and about 60 %, and at a leaching temperature of about 70°C
   b) heating the leaching solution to temperature between about 100°C and about 120°C;
   c) crystalizing Fe(TiF₆) in the form of (NH₄)₂TiF₆ by adding a crystalizing agent of about 1% in concentration, wherein the crystalizing agent is selected from the group consisting of lithium, sodium, and chloride salts thereof, potassium chloride salt and NH₄Cl;
   d) reducing (NH₄)₂TiF₆ to produce Ti(III) derivatives and aluminum(III) fluoride (AlF₃) by heating the reduction product until AlF₃ on the surface of titanium metal powder comprises between about 0,005% and about 40% of the mass of the material, preferably between about 0,05% and about 10%, and more preferably between about 0,1% and about 6,0%; and
   f) reducing the TiF₃ to titanium metal powder by aluminum / iron exchange in a furnace configured so that the titanium and fluoride are prevented from reacting with oxygen, nitrogen, carbon or hydrogen.
85. The process of paragraph 84, wherein the metal precursor is a deactivated titanium species.
86. The process of any one of paragraphs 84 and 85, wherein the hydrofluoric acid (HF) in the leaching solution is at a concentration between about 20% and about 24%.
87. The process of any one of paragraphs 84 to 86, wherein slag impurities are removed from the leaching solution by filtration.
88. The process of any one of paragraphs 84 to 87 further comprising a step g) after the step c):
   g) reducing (NH₄)₂TiF₆ with magnesium and/or sodium to produce magnesium fluoride (MgF₂) and/or sodium fluoride and TiF₃, wherein TiF₃ is converted to high-purity titanium metal powder with a plasma torch that converts between about 20% and about 30% of the TiF₃ to titanium metal, wherein the remaining titanium is in the form of TiF₄.
89. The process of any one of paragraphs 84 to 88 further comprising a step h) after the step c):
   h) reducing (NH₄)₂TiF₆ with Al (Hg-activated) or with manganese (Mn) or iron (Fe) without the addition of an acid to produce NH₄TiF₄ and (NH₄)₃AlF₆ or (NH₄)₂TiF₅ and MnF₂, wherein the soluble (NH₄)₃AlF₆ is removed from the insoluble NH₄TiF₄ by precipitate acid filtration, and producing NH₄F_{(g)} and TiF₃₍ₛ₎ by decomposition at about 700°C.
90. The process of any one of paragraphs 84 to 89 further comprising a step i) and j) after the step c):
   i) separating (NH₄)₂HTiF₆, from fluorides reducing agent by increasing the pH from 1 or 2 to 6 with NH₄OH; precipitating (NH4)₃TiF₆; filtrating; drying; and decomposing at 700°C to produce 3 NH₄F_{(g)} and TiF₃₍ₛ₎; and
   j) recycling NH₄F_{(g)} to produce (NH₄)₂HtiF₆.
91. The process of anyone of paragraphs 84 to 90 further comprising steps K) and l) after the step c):
   K) reducing (NH₄)₂TiF₆ to NH₄TiF₄ with mercury activated aluminium or aluminum carbonate to produce TiF₃; and
   l) reducing TiF₃ to titanium metal through a kiln with aluminum powder for ion exchange producing Ti metal with 2 to 6% aluminum. Can also have the right amount of vanadium added to assure the desired titanium metal chemistry.
92. The process of paragraph 84, wherein the AlF₃ produced is collected in bag house, and TiF₃ is processed through a plasma reactor to make titanium metal powder.
93. The process of any one of paragraphs 84 to 92, wherein the aluminum and/or the fluoride is recovered by steam hydrolysis at 400°C.
94. The process of any one of paragraphs 84 to 93, wherein AlF₃ is converted to acid and alumina of high purity for use in the production of aluminum.
95. The process of any one of paragraphs 84 to 94, wherein the hydrofluoric acid is recycled back into the leach.
96. Use of the process according to any one of paragraphs 63 to 95 to produce 3D printing powder alloys of titanium metal, wherein TiF₃ directly feeds into a plasma unit, TiF₄ is recycled back into a leach reactor to be reconverted into TiF₃, and wherein the precipitation, morphology and particle size of (NH₄)₂TiF₆ is controlled for acceptable 3D printing quality.
97. Use of the process of paragraph 90 and 91 wherein the titanium metal and its alloys are processed through a plasma reactor to convert product to 3D printing quality for size and shape.

## Claims

1. A process for producing titanium metal, titanium metal alloys, titanium and 3D printing quality for titanium metal and its alloys, the process comprising steps a) to g):
a) leaching a titaniferous ore or mineralwith leaching solution having hydrofluoric acid (HF) at a concentration between about 5% and about 60 %, and at a leaching temperature of about 70°C;
b) heating the leaching solution to temperature between about 100 °C and about 120 °C;
c) crystalizing (NH₄)₂TiF₆ by adding a crystalizing agent of about 1% in concentration, wherein the crystalizing agent is selected from the group consisting of lithium, sodium, and chloride salts thereof, potassium chloride salt, NH₄F, NH₄ and NH₄Cl;
d) performing a pre-reduction of (NH₄)₂TiF₆ to produce Ti(III) derivatives by
d.1) using a reducing agent to reduce (NH₄)₂TiF₆; or
d.2) electrolytically reducing (NH₄)₂TiF₆;
e) decomposing the Ti(III) derivatives at a temperature between about 400°C and about 700°C to produce TiF₃;
f) reducing the TiF₃ to titanium metal powder by contacting TiF₃ with a plasma atomization technology; and
g) optionally, recovering TiF₄ by-product to cycle it back into the leaching solution for further leaching.

2. The process of claim 1, wherein slag impurities are removed from the leaching solution by filtration.

3. The process of claim 1 or 2, wherein the leaching solution is heated at about 108°C.

4. The process of any one of claims 1 to 3, wherein the reducing agent is selected from the group consisting of aluminum, manganese, zinc, iron and magnesium.

5. The process of any one of claims 1 to 4, wherein Ti(III) derivatives comprise (NH₄)₃TiF₆, (NH₄)₂TiF₅, or NH₄TiF₄.

6. A process for producing titanium alloys, wherein titanium alloys are produced by reducing a salt mixture of a predetermined amount of a reducible fluoride salt of a first metal with a predetermined amount of at least one reducible salt of another metal, and wherein Fe²⁺ and Fe³⁺ generated in the process are removed with Cl₂ gas by converting the iron units into the form of FeCl₃ for water treatment or acid regeneration.

7. The process of claim 6, wherein the salt mixture is smelted to produce a desired titanium alloy.

8. A process for producing titanium metal and titanium, the process comprising steps a) to f):
a) using a titaniferous ore or mineral as a metal precursor;
b) leaching the titaniferous ore or mineral with leaching solution having hydrofluoric acid (HF) at a concentration between about 5 % and about 60 %, and at a leaching temperature of about 70 °C
b) heating the leaching solution to temperature between about 100 °C and about 120 °C;
c) crystalizing Fe(TiF₆) in the form of (NH₄)₂TiF₆ by adding a crystalizing agent of about 1% in concentration, wherein the crystalizing agent is selected from the group consisting of lithium, sodium, and chloride salts thereof, potassium chloride salt and NH₄Cl;
d) reducing (NH₄)₂TiF₆ to produce Ti(III) derivatives and aluminum(III) fluoride (AlF₃) by heating the reduction product until AlF₃ on the surface of titanium metal powder comprises between about 0,005 % and about 40 % of the mass of the material, preferably between about 0,05 % and about 10 %, and more preferably between about 0,1 % and about 6,0 %; and
f) reducing the TiF₃ to titanium metal powder by aluminum / iron exchange in a furnace configured so that the titanium and fluoride are prevented from reacting with oxygen, nitrogen, carbon or hydrogen.

9. The process of claim 8, wherein the metal precursor is a deactivated titanium species.

10. The process of claim 8 or 9, wherein slag impurities are removed from the leaching solution by filtration.

11. The process of any one of claims 8 to 10 further comprising a step g) after the step c):
g) reducing (NH₄)₂TiF₆ with magnesium and/or sodium to produce magnesium fluoride (MgF₂) and/or sodium fluoride and TiF₃, wherein TiF₃ is converted to high-purity titanium metal powder with a plasma torch that converts between about 20 % and about 30 % of the TiF₃ to titanium metal, wherein the remaining titanium is in the form of TiF₄;
and/or
further comprising a step h) after the step c):
h) reducing (NH₄)₂TiF₆ with Al (Hg-activated) or with manganese (Mn) or iron (Fe) without the addition of an acid to produce NH₄TiF₄ and (NH₄)₃AlF₆ or (NH₄)₂TiF₅ and MnF₂, wherein the soluble (NH₄)₃AlF₆ is removed from the insoluble NH₄TiF₄ by precipitate acid filtration, and producing NH₄F_{(g)} and TiF₃₍ₛ₎ by decomposition at about 700 °C.

12. The process of any one of claims 8 to 11 further comprising a step i) and j) after the step c):
i) separating (NH₄)₂HTiF₆, from fluorides reducing agent by increasing the pH from 1 or 2 to 6 with NH₄OH; precipitating (NH4)₃TiF₆; filtrating; drying; and decomposing at 700°C to produce 3 NH₄F_{(g)} and TiF₃₍ₛ₎; and
j) recycling NH₄F_{(g)} to produce (NH₄)₂HtiF_{6;}
and/or
further comprising steps k) and l) after the step c):
k) reducing (NH₄)₂TiF₆ to NH₄TiF₄ with mercury activated aluminium or aluminum carbonate to produce TiF₃; and
l) reducing TiF₃ to titanium metal through a kiln with aluminum powder for ion exchange producing Ti metal with 2 to 6 % aluminum. Can also have the right amount of vanadium added to assure the desired titanium metal chemistry.

13. The process of claim 8, wherein
- the AlF₃ produced is collected in bag house, and TiF₃ is processed through a plasma reactor to make titanium metal powder;
- the aluminum and/or the fluoride is recovered by steam hydrolysis at 400 °C;
- AlF₃ is converted to acid and alumina of high purity for use in the production of aluminum; and/or
- the hydrofluoric acid is recycled back into the leach.

14. Use of the process according to any one of claims 1 to 13, to produce 3D printing powder alloys of titanium metal, wherein TiF₃ directly feeds into a plasma unit, TiF₄ is recycled back into a leach reactor to be reconverted into TiF₃, and wherein the precipitation, morphology and particle size of (NH₄)₂TiF₆ is controlled for acceptable 3D printing quality.

15. Use of the process of claim 12, wherein the titanium metal and its alloys are processed through a plasma reactor to convert product to 3D printing quality for size and shape.
